# EUROPEAN PATENT APPLICATION

(11) **EP 2 808 585 A1**
(43) Date of publication of application: **03.12.2014**
(21) Application number: 13741198.9
(22) Date of filing: 16.01.2013
(51) Int. Cl.: F16J 15/20, F16J 15/32

(54) **OIL SEAL FOR AUTOMOBILE**

(30) Priority: 23.01.2012 JP 2012011391
(71) Applicant: Daikin Industries, Ltd., Osaka-shi, Osaka 530-8323 (JP)
(72) Inventor: YANAGIGUCHI Tomihiko, Osaka 530-8323 (JP); MASUDA Haruhisa, Osaka 530-8323 (JP); NAKANO Yasuhiro, Osaka 530-8323 (JP); KITAHARA Takahiro, Osaka 530-8323 (JP)
(74) Representative: Hoffmann Eitle
(86) International application number: PCT/JP2013/050632
(87) International publication number: WO 2013/111643

(57) **Abstract**

The present invention is aimed to provide an oil seal for automobiles having excellent sliding properties in addition to usual sealing performance.

The present invention relates to an oil seal for automobiles including an elastic component having a seal lip portion. The elastic component consists of a composition containing fluororubber and fluororesin. The seal lip portion has protrusions at least on the surface thereof. The protrusions substantially consist of the fluororesin contained in the composition. The fluororesin is a copolymer containing a polymerized unit based on tetrafluoroethylene and a polymerized unit based on hexafluoropropylene.

## Description

### TECHNICAL FIELD

The present invention relates to an oil seal for automobiles.

### BACKGROUND ART

Automobiles are provided with various oil seals for preventing leakage of fluids, such as engine oil. Examples of oil seals for automobiles include engine oil seals used in contact with the crankshafts of engines, oil seals used for transmissions, and valve stem seals used for valve stems.

Patent Literature 1 discloses, as an oil seal for automobiles, an engine oil seal having a lip portion for sealing formed from an elastomer composition consisting of an elastomer (e.g. acrylic rubber (ACM), fluororubber (FKM), nitrile rubber (NBR), urethane rubber (U), silicone rubber, hydrogenated nitrile rubber, and blends thereof) and a silicate compound. This literature states that the elastomer is preferably ACM or FKM.

Patent Literature 2 discloses an oil seal for engines having a rubbery lip portion formed from silicone rubber or fluororubber.

Patent Literature 3 proposes a method of forming a fluororesin coating on the surface of rubber for the purpose of reducing the sliding resistance of the seal lip portion of an oil seal.

Patent Literature 4 discloses an engine oil seal for automobiles including an elastic component that has a seal lip portion having at least a main lip portion, wherein the elastic component includes a composition containing fluororubber and fluororesin and has protrusions at least on the surface of the main lip portion, the protrusions substantially consist of the fluororesin contained in the composition, the fluororesin is a copolymer containing a polymerized unit based on ethylene and a polymerized unit based on tetrafluoroethylene, and the fluororubber is a polymer containing a polymerized unit based on vinylidene fluoride.

Patent Literature 5 discloses, as a transmission oil seal, a sealing component which is formed from an elastic material (e.g. nitrile rubber, acrylic rubber, silicone rubber, fluororubber) and which has a seal lip.

Patent Literature 6 discloses a transmission oil seal for automobiles including an elastic component that includes a seal lip portion having at least a main lip portion, wherein the elastic component includes a composition containing fluororubber and fluororesin and has protrusions at least on the surface of the main lip portion, the protrusions substantially consists of the fluororesin contained in the composition, the fluororesin is a copolymer containing a polymerized unit based on ethylene and a polymerized unit based on tetrafluoroethylene, and the fluororubber is a polymer containing a polymerized unit based on vinylidene fluoride.

Patent Literature 7 discloses, as a valve stem seal, a sliding structure forming a diamond-like hard carbon layer on the inner surface of a seal component fitting onto a valve stem to reduce the sliding resistance between the seal component and the valve stem.

Patent Literature 8 discloses a valve stem seal having a fluororesin layer on the inner sliding surface of a seal lip portion.

Patent Literature 9 discloses formation of part, including the sliding surface, or the whole of a valve stem oil seal component from a lubricant rubber composition containing thermoplastic fluororesin, fluororubber, and a low molecular weight fluoropolymer to improve the durability and the sealability.

Patent Literature 10 discloses a valve stem seal for automobiles including an elastic component which is disposed at an end of a valve stem guide and which has a seal lip portion in slidable close contact with the valve stem of an engine, wherein the elastic component includes a composition containing fluororubber and fluororesin and has protrusions at least on the surface of the seal lip portion, the protrusions substantially consist of the fluororesin contained in the composition, the fluororesin is a copolymer containing a polymerized unit based on ethylene and a polymerized unit based on tetrafluoroethylene, and the fluororubber is a polymer containing a polymerized unit based on vinylidene fluoride.

Patent Literature 11 discloses a cross-linkable fluororubber composition containing fluororubber and fluororesin wherein the fluororubber and the fluororesin are obtained by co-coagulation of fluororubber and fluororesin; and a fluororubber molded product obtained by cross-linking the cross-linkable fluororubber composition. However, Patent Literature 11 fails to disclose specific production of an oil seal for automobiles.

### CITATION LIST

### - Patent Literature

Patent Literature 1: JP H08-338533 A
Patent Literature 2: JP H07-208610 A
Patent Literature 3: JP 2006-292160 A
Patent Literature 4: WO 2011/111630
Patent Literature 5: JP 2005-61454 A
Patent Literature 6: WO 2011/111631
Patent Literature 7: JP 2005-180329 A
Patent Literature 8: JP H09-68011 A
Patent Literature 9: JP H06-49438 A
Patent Literature 10: WO 2011/111632
Patent Literature 11: WO 2011/002080

### SUMMARY OF INVENTION

### - Technical Problem

Current requests of higher performance (higher rotation speed) and lower fuel consumption of engines for automobiles lead to a demand for better sliding properties of oil seals for automobiles.

Conventional oil seals for automobiles containing fluororubber and/or silicone rubber are likely to have better sliding properties than oil seal for automobiles containing acrylic rubber and/or nitrile rubber. Patent Literatures 4, 6, and 10 disclose engine oil seals for automobiles whose seal lip portions have protrusions substantially consisting of fluororesin on the surface thereof in which the fluororesin is a copolymer containing a polymerized unit based on ethylene and a polymerized unit based on tetrafluoroethylene. The documents disclose that these protrusions provide better sliding properties.

However, oil seals for automobiles need to have more improved sliding properties based on the above requests.

The present invention is aimed to provide an oil seal for automobiles having excellent sliding properties in addition to usual sealing performance.

### - Solution to Problem

The present invention relates to an oil seal for automobiles including an elastic component including a seal lip portion, the elastic component including a composition containing fluororubber and fluororesin and having protrusions at least on a surface of the seal lip portion, the protrusions substantially consisting of the fluororesin contained in the composition, and the fluororesin being a copolymer including a polymerized unit based on tetrafluoroethylene and a polymerized unit based on hexafluoropropylene.

### - Advantageous Effects of Invention

Since the oil seal for automobiles of the present invention has the aforementioned structure, it has excellent sliding properties in addition to usual sealing performance.

### BRIEF DESCRIPTION OF THE DRAWINGS

Fig. 1(a) is a perspective view schematically showing the shapes of protrusions on a seal lip portion; Fig. 1(b) is a cross-sectional view of protrusions 11 along the plane including the straight lines B₁ and B₂ perpendicular to the surface shown in Fig. 1(a); and Fig. 1(c) is a cross-sectional view along the plane including the straight lines C₁ and C₂ parallel with the surface shown in Fig. 1(a).
Fig. 2 is a cross-sectional view schematically showing an engine oil seal for automobiles in use, and is an enlarged view of the region A shown in Fig. 3.
Fig. 3 is a cross-sectional view schematically showing an engine using an engine oil seal for automobiles and a valve stem seal for automobiles.
Fig. 4 is a perspective view of the engine oil seal for automobiles shown in Fig. 2.
Fig. 5 is a cross-sectional view schematically showing a transmission oil seal for automobiles in use, and is an enlarged view of the region C shown in Fig. 6.
Fig. 6 is a cross-sectional view schematically showing a transmission using a transmission oil seal for automobiles.
Fig. 7 is a perspective view showing the transmission oil seal for automobiles shown in Fig. 5.
Fig. 8 is a cross-sectional view showing the valve stem seal for automobiles of the present invention shown in Fig. 9.
Fig. 9 is a cross-sectional view schematically showing a valve stem seal for automobiles in use, and is an enlarged view of the region B shown in Fig. 3.
Fig. 10 is a schematic view of an oil seal torque meter used in EXAMPLES.
Fig. 11 is a schematic view of a stroke load tester used in EXAMPLES.

### DESCRIPTION OF EMBODIMENTS

The oil seal for automobiles of the present invention is an oil seal for automobiles including an elastic component including a seal lip portion, the elastic component including a composition which contains fluororubber and fluororesin and having protrusions at least on the surface of the seal lip portion, the protrusions substantially consisting of the fluororesin contained in the composition, and the fluororesin being a copolymer including a polymerized unit based on tetrafluoroethylene and a polymerized unit based on hexafluoropropylene.

The oil seal for automobiles of the present invention has protrusions consisting of the specific fluororesin on the surface of the seal lip portion. Thus, it promotes an oil-trapping effect against a lubricant at sliding portions where the seal lip portion is in close contact with a crankshaft, an axle, a valve stem, and the like of an engine. Consequently, the oil seal for automobiles has markedly excellent sliding property at the sliding portions.

For example, when the oil seal for automobiles of the present invention is used as an engine oil seal for automobiles or a transmission oil seal for automobiles, the rotational torque is very low. When it is used as a valve stem seal for automobiles, the stroke load is low.

The components of the oil seal for automobiles of the present invention will be described in detail below.

### Fluororubber

The fluororubber usually includes an amorphous polymer which has a fluorine atom bonded to a carbon atom in the main chain and which has rubber elasticity. The fluororubber may consist of a single polymer or two or more polymers.

The fluororubber is preferably at least one selected from the group consisting of vinylidene fluoride (VdF)/hexafluoropropylene (HFP) copolymers, VdF/HFP/tetrafluoroethylene (TFE) copolymers, TFE/propylene copolymers, TFE/propylene/VdF copolymers, ethylene/HFP copolymers, ethylene/HFP/VdF copolymers, ethylene/HFP/TFE copolymers, VdF/TFE/perfluoro(alkyl vinyl ether) (PAVE) copolymers, and VdF/chlorotrifluoroethylene (CTFE) copolymers. The fluororubber is more preferably a copolymer including a VdF unit because such fluororubber can lead to an oil seal for automobiles with better sliding property.

The following will describe a fluororubber which includes a copolymer including the vinylidene fluoride (VdF) unit (hereinafter, also referred to as a VdF fluororubber). The VdF fluororubber is a fluororubber at least including a polymerized unit derived from VdF.

The copolymer including a VdF unit is preferably a copolymer including a VdF unit and a copolymerized unit derived from a fluoroethylenic monomer (excluding a VdF unit). The copolymer including a VdF unit also preferably includes a copolymerized unit derived from a monomer which is copolymerizable with VdF and a fluoroethylenic monomer.

The copolymer including a VdF unit preferably includes 30 to 90 mol% of a VdF unit and 70 to 10 mol% of a copolymerized unit derived from a fluoroethylenic monomer; more preferably 30 to 85 mol% of a VdF unit and 70 to 15 mol% of a copolymerized unit derived from a fluoroethylenic monomer; and still more preferably 30 to 80 mol% of a VdF unit and 70 to 20 mol% of a copolymerized unit derived from a fluoroethylenic monomer. The amount of the copolymerized unit derived from a monomer which is copolymerizable with VdF and a fluoroethylenic monomer is preferably 0 to 10 mol% for the sum of the amounts of the VdF unit and the copolymerized unit derived from a fluoroethylenic monomer.

Examples of the fluoroethylenic monomer include TFE, CTFE, trifluoroethylene, HFP, trifluoropropylene, tetrafluoropropylene, pentafluoropropylene, trifluorobutene, tetrafluoroisobutene, PAVE, vinyl fluoride, and fluoromonomers (e.g. fluorovinyl ether) represented by the formula (1):

CFX=CXOCF₂OR¹ (1)

wherein Xs may be the same as or different from each other and are each H, F, or CF₃; R¹ is a C1-C6 linear or branched fluoroalkyl group which may optionally contain one or two atom(s) selected from the group consisting of H, Cl, Br, and I, or a C5-C6 cyclic fluoroalkyl group which may optionally contain one or two atom(s) selected from the group consisting of H, Cl, Br, and I. The fluoroethylenic monomer is preferably at least one selected from the group consisting of fluorovinyl ether represented by the formula (1), TFE, HFP, and PAVE, and more preferably at least one selected from the group consisting of TFE, HFP, and PAVE.

The PAVE is preferably one represented by the formula (2) :

CF₂=CFO (CF₂CFY¹O)ₚ- (CF₂CF₂CF₂O) q-Rf (2)

wherein Y¹ is F or CF₃; Rf is a C1-C5 perfluoroalkyl group; p is an integer of 0 to 5; and q is an integer of 0 to 5.

The PAVE is more preferably perfluoro(methyl vinyl ether) or perfluoro(propyl vinyl ether), and still more preferably perfluoro(methyl vinyl ether). Each of these may be used alone, or may be used in any combination.

Examples of the monomer which is copolymerizable with VdF and a fluoroethylenic monomer include ethylene, propylene, and alkyl vinyl ethers.

The copolymer including a VdF unit is preferably a copolymer containing a polymerized unit based on VdF and a polymerized unit based on at least one monomer selected from the group consisting of TFE, HFP, and PAVE. This copolymer is preferably at least one copolymer selected from the group consisting of VdF/HFP copolymers, VdF/HFP/TFE copolymers, VdF/CTFE copolymers, VdF/CTFE/TFE copolymers, VdF/PAVE copolymers, VdF/TFE/PAVE copolymers, VdF/HFP/PAVE copolymers, and VdF/HFP/TFE/PAVE copolymers. Particularly preferable among these copolymers including a VdF unit is at least one copolymer selected from the group consisting of VdF/HFP copolymers and VdF/HFP/TFE copolymers in terms of heat resistance. These copolymers including a VdF unit preferably satisfy the aforementioned compositional ratio between the VdF unit and the copolymerized unit derived from a fluoroethylenic monomer.

The VdF/HFP copolymer preferably satisfies a VdF/HFP ratio by mole of 45 to 85/55 to 15, more preferably 50 to 80/50 to 20, and still more preferably 60 to 80/40 to 20.

The VdF/HFP/TFE copolymer preferably satisfies a VdF/HFP/TFE ratio by mole of 40 to 80/10 to 35/10 to 35.

The VdF/PAVE copolymer preferably satisfies a VdF/PAVE ratio by mole of 65 to 90/10 to 35.

The VdF/TFE/PAVE copolymer preferably satisfies a VdF/TFE/PAVE ratio by mole of 40 to 80/3 to 40/15 to 35.

The VdF/HFP/PAVE copolymer preferably satisfies a VdF/HFP/PAVE ratio by mole of 65 to 90/3 to 25/3 to 25.

The VdF/HFP/TFE/PAVE copolymer preferably satisfies a VdF/HFP/TFE/PAVE ratio by mole of 40 to 90/0 to 25/0 to 40/3 to 35, and more preferably 40 to 80/3 to 25/3 to 40/3 to 25.

The fluororubber also preferably includes a copolymer containing a copolymerized unit derived from a monomer that gives a cross-linkable moiety. Examples of the monomer that gives a cross-linkable moiety include iodine-containing monomers such as perfluoro(6,6-dihydro-6-iodo-3-oxa-1-hexene) and perfluoro(5-iodo-3-oxa-1-pentene) disclosed in JP H05-63482 B and JP H07-316234 A, bromine-containing monomers disclosed in JP H04-505341 T, and cyano group-containing monomers, carboxyl group-containing monomers, and alkoxy carbonyl group-containing monomers disclosed in JP H04-505345 T and JP H05-500070 T.

The fluororubber is also preferably a fluororubber having an iodine atom or a bromine atom at a terminus of the main chain. The fluororubber having an iodine atom or a bromine atom at a terminus of the main chain can be produced by emulsion polymerization of a monomer using a radical initiator substantially without oxygen in the presence of a halogen compound in an aqueous medium. Representative examples of the halogen compound to be used include compounds represented by the formula:

R²IₓBr_{y}

wherein x and y each are an integer of 0 to 2 and they satisfy 1 ≤ x + y ≤ 2; R² is a C1-C16 saturated or unsaturated fluorohydrocarbon group, a C1-C16 saturated or unsaturated chlorofluorohydrocarbon group, a C1-C3 hydrocarbon group, or a C3-C10 cyclic hydrocarbon group which may optionally be substituted by an iodine atom or a bromine atom, each of these groups may optionally have an oxygen atom.

Examples of the halogen compound include
1,3-diiodoperfluoropropane,
1,3-diiodo-2-chloroperfluoropropane,
1,4-diiodoperfluorobutane,
1,5-diiodo-2,4-dichloroperfluoropentane,
1,6-diiodoperfluorohexane, 1,8-diiodoperfluorooctane,
1,12-diiodoperfluorododecane,
1,16-diiodoperfluorohexadecane, diiodomethane,
1,2-diiodoethane, 1,3-diiodo-n-propane, CF₂Br₂, BrCF₂CF₂Br, CF₃CFBrCF₂Br, CFClBr₂, BrCF₂CFClBr, CFBrClCFClBr, BrCF₂CF₂CF₂Br, BrCF₂CFBrOCF₃, 1-bromo-2-iodoperfluoroethane,
1-bromo-3-iodoperfluoropropane,
1-bromo-4-iodoperfluorobutane,
2-bromo-3-iodoperfluorobutane,
3-bromo-4-iodoperfluorobutene-1,
2-bromo-4-iodoperfluorobutene-1, monoiodo-monobromo substitution products of benzene, diiodo-monobromo substitution products of benzene, and (2-iodoethyl) and (2-bromoethyl) substitution products. These compounds may be used alone or in combination with each other.

Preferable is 1,4-diiodoperfluorobutane or diiodomethane in terms of properties such as polymerization reactivity, cross-linkability, and easy availability.

For good processability, the fluororubber preferably has a Mooney viscosity (ML₁₊₁₀ (100°C)) of 5 to 140, more preferably 10 to 120, and still more preferably 20 to 100.

The Mooney viscosity can be determined in conformity with ASTM-D1646.
Measurement device: MV2000E (ALPHA TECHNOLOGIES Inc.)
Rotational speed of rotor: 2 rpm
Measurement temperature: 100°C

Various usual compounding agents and additives to be blended into fluororubber as appropriate may be blended into the aforementioned composition, such as fillers, processing aids, plasticizers, colorants, stabilizers, adhesive aids, release agents, electro-conductivity-imparting agents, thermal-conductivity-imparting agents, surface non-adhesive agents, flexibility-imparting agents, heat-resistance improvers, and flame retarders. These additives and compounding agents are used to the extent that they do not adversely affect the effects of the present invention.

### Fluororesin

Fluororesin is a copolymer (hereinafter, also referred to as "FEP") containing a polymerized unit based on tetrafluoroethylene (TFE) and a polymerized unit based on hexafluoropropylene (HFP). FEP gives very excellent sliding property to the oil seal for automobiles of the present invention. FEP is also preferable in that it gives excellent heat and oil resistances to the oil seal for automobiles.

The fluororesin is preferably perfluoro resin because it gives better sliding property to the oil seal for automobiles.

The FEP is preferably a copolymer containing 70 to 99 mol% of a TFE unit and 1 to 30 mol% of a HFP unit, more preferably a copolymer containing 80 to 97 mol% of a TFE unit and 3 to 20 mol% of a HFP unit. Less than 70 mol% of a TFE unit tends to deteriorate the mechanical properties, whereas more than 99 mol% thereof tends to cause too high a melting point, deteriorating the moldability.

The FEP may be a copolymer including TFE, HFP, and a monomer copolymerizable with TFE and HFP. Examples of such a monomer include perfluoro(alkyl vinyl ethers) (PAVE) represented by CF₂=CF-ORf⁶ (wherein Rf⁶ is a C1-C5 perfluoroalkyl group); vinyl monomers represented by CX⁵X⁶=CX⁷(CF₂)ₙX⁸ (wherein X⁵, X⁶, and X⁷ are the same as or different from each other, and each are a hydrogen atom or a fluorine atom; X⁸ is a hydrogen atom, a fluorine atom, or a chlorine atom; n is an integer of 2 to 10); and alkyl perfluorovinyl ether derivatives represented by CF₂=CF-OCH₂-Rf⁷ (wherein Rf⁷ is a C1-C5 perfluoroalkyl group). PAVE is preferred.

The PAVE is preferably at least one selected from the group consisting of perfluoro(methyl vinyl ether) (PMVE), perfluoro(ethyl vinyl ether) (PEVE), perfluoro(propyl vinyl ether) (PPVE), and perfluoro(butyl vinyl ether). It is more preferably at least one selected from the group consisting of PMVE, PEVE, and PPVE.

The alkyl perfluorovinyl ether derivative is preferably one in which Rf⁷ is a C1-C3 perfluoroalkyl group, and more preferably one represented by CF₂=CF-OCH₂-CF₂CF₃.

For FEP containing a monomer unit which is derived from a monomer copolymerizable with TFE and HFP, the amount of the monomer unit derived from a monomer copolymerizable with TFE and HFP is preferably 0.1 to 10 mol% and the sum of the amounts of the TFE unit and the HFP unit is preferably 90 to 99.9 mol%. Less than 0.1 mol% of the copolymerizable monomer unit tends to deteriorate the moldability, the environmental stress-crack resistance, and stress-crack resistance. More than 10 mol% thereof tends to deteriorate properties such as heat resistance, mechanical properties, and productivity. For FEP containing a monomer unit which is derived from a monomer copolymerizable with TFE and HFP, the amount of the monomer unit derived from a monomer copolymerizable with TFE and HFP is more preferably 0.1 to 9 mol% and the sum of the amounts of the TFE unit and the HFP unit is more preferably 91 to 99.9 mol%.

The melting point of the fluororesin is preferably not lower than the cross-linking temperature of the fluororubber. The preferable range of the melting point of the fluororesin depends on the type of the fluororubber as long as it is not lower than the cross-linking temperature of the fluororubber. For example, the melting point is preferably 150°C or higher, and more preferably 180°C or higher. The upper limit is not particularly limited, and may be 300°C. In order to provide an oil seal for automobiles with better sliding property, the melting point of the fluororesin is preferably 230°C or lower, and more preferably 220°C or lower.

Too low a melting point may cause melting of the fluororesin upon cross-linking and molding, likely failing to give an oil seal for automobiles with a desired shape. In addition, such a low melting point may result in failure in giving an oil seal for automobiles having a sufficient number of protrusions on the surface of the seal lip portion.

The fluororesin preferably has a melt flow rate (MFR) at 327°C of 0.3 to 100 g/10 min. Too low a MFR may make it impossible to sufficiently form protrusions on the surface, likely resulting in poor sliding property. Too high a MFR may make it impossible to mold the resin. The MFR is determined at a temperature of 327°C and a load of 5 kg in conformity with ASTM D3307-1.

For fluororesin having a melting point of lower than 200°C, the MFR is measured at 280°C. In this case, the fluororesin preferably has a MFR at 280°C of 0.3 to 100 g/10 min. The MFR is determined at a temperature of 280°C and a load of 5 kg in conformity with ASTM D3307-1.

The oil seal for automobiles preferably has a low compression set so as not to be removed from a housing. In order to further reduce the compression set of the oil seal for automobiles, the fluororesin is preferably at least one selected from the group consisting of the fluororesins (B1) and (B2) each having the following specific composition.

The fluororesins (B1) and (B2) each are a copolymer including a tetrafluoroethylene (TFE) unit and a hexafluoropropylene (HFP) unit at a specific composition. The fluororesin (B1) or (B2) having a specific composition further improves the sliding property of the oil seal for automobiles of the present invention, as well as a low compression set of the oil seal for automobiles.

The fluororesins (B1) and (B2) are also preferable in that they have excellent compatibility with fluororubber and allow the oil seal for automobiles to have excellent heat resistance.

The fluororesin (B1) is a polymer consisting only of a TFE unit (a) and a HFP unit (b) with a ratio (TFE unit (a)/HFP unit (b)) by mole of 80.0 to 87.3/12.7 to 20.0. The fluororesin (B1) having the above specific composition markedly decreases the compression set of the oil seal for automobiles.

In order to give a much lower compression set and better mechanical properties, the fluororesin (B1) preferably satisfies the ratio (a)/(b) by mole of 82.0 to 87.0/13.0 to 18.0, more preferably 83.0 to 86.5/13.5 to 17.0, and still more preferably 83.0 to 86.0/14.0 to 17.0. Too high a ratio (a)/(b) may insufficiently reduce the compression set of the oil seal for automobiles. Too low a ratio (a)/(b) tends to deteriorate the mechanical properties.

The fluororesin (B2) is a copolymer including a tetrafluoroethylene unit (a), hexafluoropropylene unit (b), and a polymerized unit (c) based on a monomer copolymerizable with tetrafluoroethylene and hexafluoropropylene with a ratio (a)/(b) by mole of 80.0 to 90.0/10.0 to 20.0 and a ratio (c)/{(a) + (b)} by mole of 0.1 to 10.0/90.0 to 99.9, wherein {(a) + (b)} means the sum of the tetrafluoroethylene unit (a) and the hexafluoropropylene unit (b). The ratio (a)/(b) by mole of 80.0 to 90.0/10.0 to 20.0 and the ratio (c)/{(a) + (b)} by mole of 0.1 to 10.0/90.0 to 99.9 markedly reduce the compression set.

In order to further reduce the compression set and to give excellent mechanical properties, the fluororesin (B2) preferably satisfies the ratio (a)/(b) by mole of 82.0 to 88.0/12.0 to 18.0, more preferably 84.0 to 88.0/12.0 to 16.0. Too high a ratio (TFE unit (a)/HFP unit (b)) may insufficiently reduce the compression set of the oil seal for automobiles. Further, it tends to increase the melting point excessively, deteriorating the moldability. Too low a ratio (TFE unit (a)/HFP unit (b)) tends to deteriorate the mechanical properties.

The fluororesin (B2) preferably satisfies the ratio (c)/{(a) + (b)} by mole of 0.3 to 8.0/92.0 to 99.7.

The monomer copolymerizable with TFE and HFP used in the fluororesin (B2) is the same as mentioned above.

The polymerized unit (c) based on a monomer copolymerizable with TFE and HFP used in the fluororesin (B2) is preferably a PAVE unit. The fluororesin (B2) is more preferably a copolymer consisting only of a TFE unit, a HFP unit, and a PAVE unit.

The fluororesins (B1) and (B2) each preferably have a melting point of 210°C or lower. The melting point is more preferably 130°C to 210°C, still more preferably 150°C to 200°C, and particularly preferably 160°C to 190°C. The fluororesin having a melting point of lower than 130°C may bled out upon cross-linking and molding, likely failing to give sufficient sliding property. The fluororesin having a melting point of higher than 210°C may have a high storage elastic modulus, disadvantageously deteriorating a low compression set of the oil seal for automobiles.

In order to reduce the compression set of the oil seal for automobiles, the fluororesins (B1) and (B2) each preferably have a storage elastic modulus (E') by dynamic viscoelasticity measurement at 70°C of 10 to 160 MPa.

The storage elastic modulus is a value measured by dynamic viscoelasticity measurement at 70°C. More specifically, it is a value measured on a sample of 30 mm in length x 5 mm in width x 0.5 mm in thickness using a dynamic viscoelasticity analyzer DVA220 (IT KEISOKU SEIGYO K.K.) in the following conditions: tensile mode, grip width: 20 mm, measurement temperature: 25°C to 200°C, temperature-increasing rate: 2°C/min, and frequency: 1 Hz. The storage elastic modulus (E') at 70°C is preferably 10 to 160 MPa, more preferably 20 to 140 MPa, and still more preferably 30 to 100 MPa.

The elastic component includes a composition containing fluororubber and fluororesin and has protrusions at least on the surface of the seal lip portion, with the protrusions substantially consisting of the fluororesin contained in the above composition. The protrusions on the surface of the seal lip portion give excellent sliding property to the oil seal for automobiles of the present invention.

The protrusions substantially consist of the fluororesin contained in the composition. The protrusions may be formed by, for example, a method of producing an oil seal for automobiles to be mentioned later; specifically, by allowing the fluororesin contained in the cross-linkable composition produced in the below-mentioned mixing step (I) to precipitate on the surface.

The protrusions have no clear interfaces with the seal lip portion, and the protrusions are integrated with the seal lip portion. This structure more securely gives an effect of suppressing removal and breakage of the protrusions.

The fact that the protrusions substantially consist of the fluororesin contained in the composition containing fluororubber and fluororesin can be indicated by determining the ratio between the peak assigned to the fluororubber and the peak assigned to the fluororesin by IR analysis or ESCA. Specifically, in the region including protrusions, the ratio (ratio between peaks assigned to the components) between the peak of characteristic absorption assigned to the fluororubber and the peak of characteristic absorption assigned to the fluororesin is determined by IR analysis at the portion with protrusions and the portion without protrusions, and the value (peak with protrusions)/(peak without protrusions) (= ratio between peaks) is at least 1.2 or higher, preferably 1.5 or higher, and more preferably 2.0 times or higher.

The shapes of the protrusions will be described in detail below referring to the drawings.

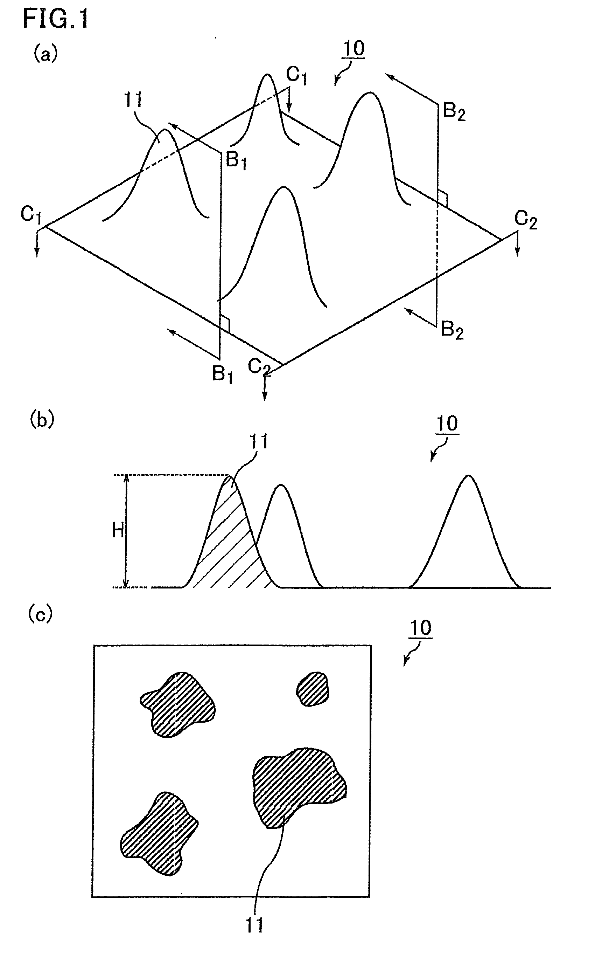

Fig. 1(a) is a perspective view schematically showing the shapes of protrusions on a seal lip portion; Fig. 1(b) is a cross-sectional view of protrusions 11 along the plane including the straight lines B₁ and B₂ perpendicular to the surface shown in Fig. 1(a); and Fig. 1(c) is a cross-sectional view along the plane including the straight lines C₁ and C₂ parallel with the surface shown in Fig. 1(a). Figs. 1(a) to 1(c) schematically show a very small region on the surface of the seal lip portion. As shown in Figs. 1(a) to 1(c), the surface of the seal lip portion has protrusions 11 formed thereon having, for example, a substantially conical shape.

The height of each protrusion 11 means the height of a portion projected from the surface of the seal lip portion (see the symbol H in Fig. 1(b)). The bottom cross-sectional area of each protrusion 11 means the area of the cross section of the protrusion 11 which is formed by cutting the protrusion 11 on the plane (the plane including the straight lines C₁ and C₂) parallel with the surface of the seal lip portion (see Fig. 1(c)).

The proportion of the area of the region having protrusions on the surface of the seal lip portion (the occupancy of protrusions) is preferably 0.06 (6%) or higher. The proportion of the area is more preferably 0.15 (15%) or higher, still more preferably 0.20 (20%) or higher, particularly preferably 0.25 (25%) or higher, and most preferably 0.30 (30%) or higher. The proportion of the area of the region having protrusions on the surface of the seal lip portion means the proportion of the area of the protrusions on the cross section for evaluating the bottom cross-sectional area of the protrusions.

The proportion of the volume of the fluororesin in the seal lip portion is preferably 0.05 to 0.45 (5 to 45% by volume) to the volume of the seal lip portion. The lower limit of the proportion of the volume is more preferably 0.10 (10% by volume), still more preferably 0.15 (15% by volume), and particularly preferably 0.20 (20% by volume). The upper limit of the proportion of the volume is more preferably 0.40 (40% by volume), still more preferably 0.35 (35% by volume), and particularly preferably 0.30 (30% by volume).

The fluororesin is a copolymer including a polymerized unit based on tetrafluoroethylene and a polymerized unit based on hexafluoropropylene, and has excellent heat resistance. Thus, the fluororesin is not decomposed through the step of cross-linking and molding or the step of heating to be mentioned later, and the proportion of the volume of the fluororesin in the seal lip portion can be considered as the proportion of the volume of the fluororesin contained in the cross-linkable composition to be mentioned later.

The oil seal for automobiles of the present invention preferably satisfies that the proportion of the area of the region having protrusions on the surface of the seal lip portion is 1.2 times or more, and more preferably 1.3 times or more, of the proportion of the volume of the fluororesin in the seal lip portion, i.e., the proportion of the volume of the fluororesin in the composition containing fluororubber and fluororesins. This means that the proportion of the region having protrusions on the surface of the seal lip portion is higher than the proportion of the volume of the fluororesin in the seal lip portion, i.e., the proportion of the volume of the fluororesin in the composition containing the fluororubber and the fluororesin.

Even though the proportion of the fluororesin mixed is low, due to this characteristic, the oil seal for automobiles of the present invention improve the sliding property, which is a disadvantage of fluororubber, and does not deteriorate the elasticity, which is an advantage of fluororubber.

When the proportion of the area of the region having the protrusions is achieved at least in the seal lip portion, the effects of the present invention can be sufficiently exerted.

The protrusions are each preferably 0.1 to 30.0 µm in height. Protrusions having heights within this range give excellent sliding property to the oil seal for automobiles of the present invention without deteriorating the sealability. The height is more preferably 0.3 to 20.0 µm, and still more preferably 0.5 to 10.0 µm.

The protrusions are each preferably 0.1 to 2000 µm² in bottom cross-sectional area. Protrusions having bottom cross-sectional areas within this range give much better sliding property to the oil seal for automobiles of the present invention. The bottom cross-sectional area is more preferably 0.3 to 1500 µm², and still more preferably 0.5 to 1000 µm².

The seal lip portion preferably satisfies that the standard deviation of the heights of the protrusions is 0.300 or lower. Protrusions having a standard deviation within this range give much better sliding property to the oil seal for automobiles of the present invention.

The seal lip portion preferably has 500 to 60000 protrusions per mm². The lower limit of the number of protrusions is more preferably 2000 per mm², and still more preferably 4000 per mm². The number of protrusions within this range give much better sliding property to the oil seal for automobiles of the present invention.

The proportion of the area of the region having protrusions, the heights of protrusions, the bottom cross-sectional areas of protrusions, the number of protrusions, and the like parameters can be calculated using a color 3D laser microscope (VK-9700, Keyence Corp.) and WinRooF Ver.6.4.0 (MITANI CORP.) as an analysis software. The proportion of the area of the region having protrusions can be determined as follows: the bottom cross-sectional area of each protrusion is measured, and the sum of the bottom cross-sectional areas is calculated as the proportion in the whole area measured. The number of protrusions is the number of protrusions within the region measured in terms of the number per mm².

Examples of the oil seal for automobiles of the present invention include engine oil seals for automobiles, transmission oil seals for automobiles, and valve stem seals for automobiles.

Preferably, the oil seal for automobiles of the present invention is an engine oil seal for automobiles, wherein the seal lip portion has at least a main lip portion and the elastic component has protrusions at least on the surface of the main lip portion.

Current requests of higher performance (higher rotation speed) and lower fuel consumption of engines for automobiles lead to a demand for better sliding properties of oil seals for automobiles. Especially, the engine oil seal for automobiles is required to have improved sliding properties throughout the rotation-speed range, from low-rotation-speed range to high-rotation-speed range, of an engine for automobiles.

The oil seal for automobiles of the present invention having the above structure can have excellent sliding properties throughout the rotation-speed range, from low-rotation-speed range to high-rotation-speed range, of an engine. Thus, the oil seal for automobiles of the present invention provides a very low torque in rotation, and is therefore suitable for an engine oil seal for automobiles which is required to have low fuel consumption.

Therefore, the oil seal for automobiles of the present invention is particularly preferably an engine oil seal for automobiles.

The following will describe embodiments of the engine oil seal for automobiles referring to the drawings.

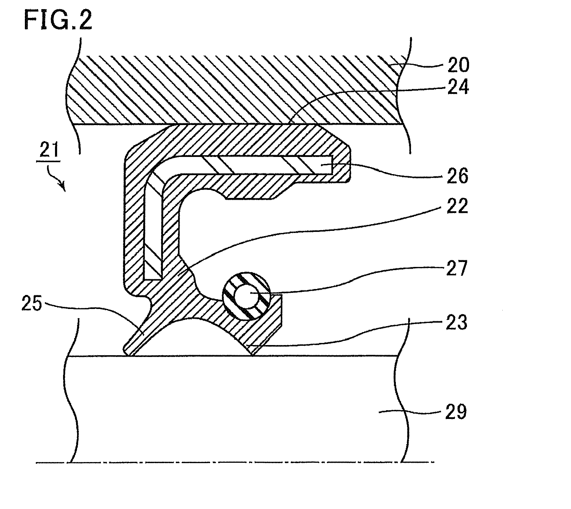

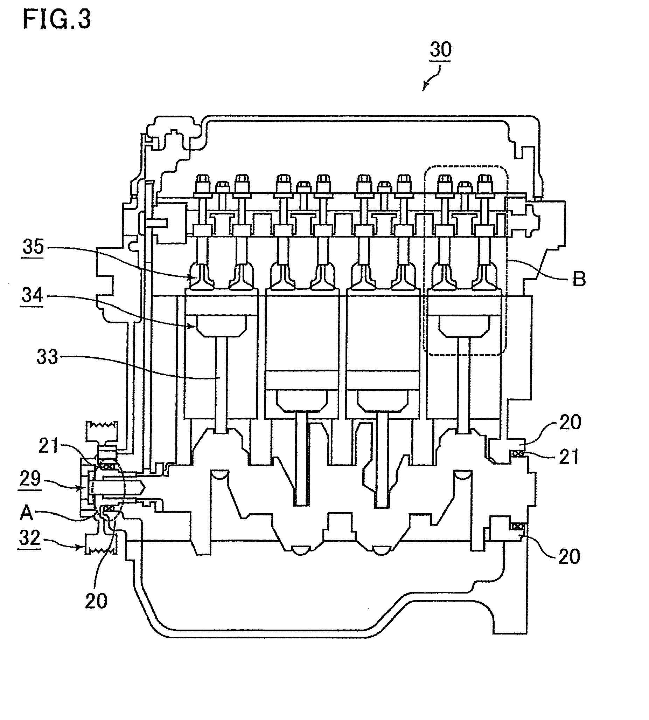

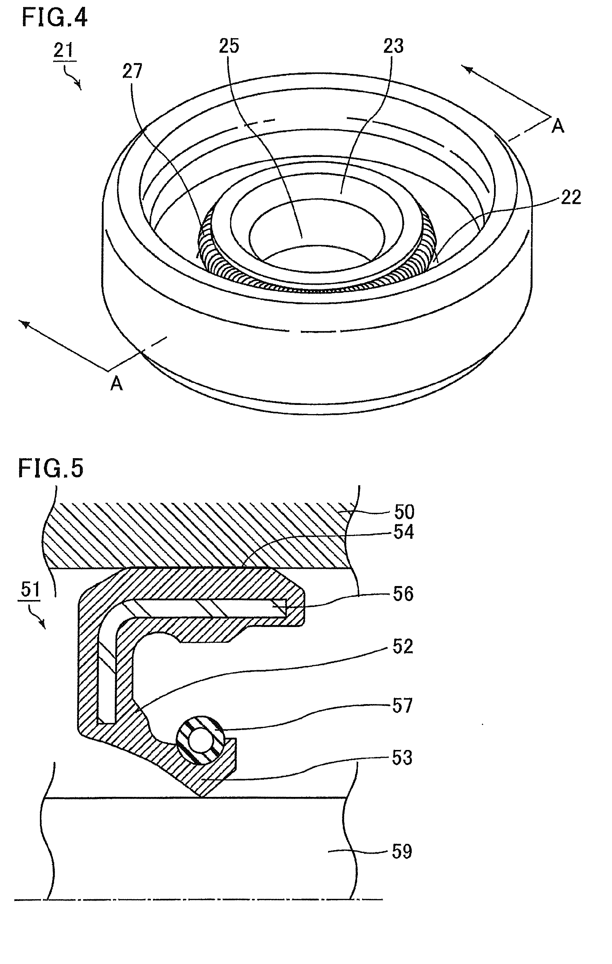

Fig. 2 is a cross-sectional view schematically showing an engine oil seal for automobiles in use, and is an enlarged view of the region A shown in Fig. 3. Fig. 3 is a cross-sectional view schematically showing an engine using an engine oil seal for automobiles and a valve stem seal for automobiles. Fig. 4 is a perspective view of the engine oil seal for automobiles shown in Fig. 2. The engine oil seal for automobiles shown in Fig. 2 corresponds to the cross section along the A-A line in Fig. 4.

As shown in Figs. 2 to 4, an engine oil seal 21 for automobiles has a circular structure whose cross-sectional shape in radial direction is substantially a U-shape (turned sideways), and includes an elastic component 22 which includes a composition containing fluororesin and fluororubber, a cyclic metal ring 26, and a ring spring 27.

The elastic component 22 has a seal lip portion and a fitting portion 24 in close contact with a housing 20. The seal lip portion includes a main lip portion 23 which has a wedge-shaped cross section in the radial direction and which is in contact with a crankshaft 29, and a sub-lip portion 25 which protrudes toward the internal circumference along the circumferential direction. The metal ring 26 is built in the elastic component 22, thereby reinforcing the engine oil seal 21 for automobiles. The ring spring 27 is disposed on the outer circumference of the main lip portion 23, and the main lip portion 23 is made in contact with the crankshaft 29 by biasing force of the ring spring 27.

The engine oil seal 21 for automobiles is press-fit between the crankshaft 29 and the housing 20 such that the main lip portion 23 is placed toward the inside of an engine 30 and the sub-lip portion 25 is placed toward the outside of the engine 30, the main lip portion 23 is in slidable contact with the crankshaft 29 of the engine 30, and the fitting portion 24 is in close contact with the housing 20. In Fig. 3, the reference numerals 32, 33, 34, and 35 represent a crank pulley, a connecting rod, a piston, and a valve, respectively.

The elastic component 22 of the engine oil seal 21 for automobiles includes a composition containing fluororesin and fluororubber, and the seal lip portion including the main lip portion 23 and the sub-lip portion 25 has protrusions on the surface thereof (see Fig. 1). In other words, the engine oil seal 21 for automobiles has protrusions at portions in contact with the crankshaft 29.

Owing to the above protrusions, the engine oil seal 21 for automobiles has a less coefficient of friction with the crankshaft 29 and is excellent in sliding properties.

Such excellent sliding properties can be achieved at any rotation speed of the engine throughout the rotation-speed range, from low-rotation-speed range to high-rotation-speed range. This is more specifically described below.

The material of the main lip portion 23 of the engine oil seal 21 for automobiles is a composition containing the aforementioned specific fluororesin and fluororubber. Thus, it has better sliding properties than conventionally known materials of engine oil seals for automobiles, such as nitrile rubber, acrylic rubber, and fluororubber which does not contain the aforementioned fluororesin.

In addition, the engine oil seal 21 for automobiles has protrusions including the above composition.

When an engine oil seal for automobiles is sliding on a crankshaft, it is known that an oil exists (an oil layer is formed) between the engine oil seal for automobiles and the crankshaft. This oil is considered to serve as a lubricant between the components. In other words, the oil present therebetween allows the engine oil seal for automobiles to slide with a low friction resistance.

In contrast, it is the basic assumption that the engine oil seal for automobiles serves as a sealant. Thus, the seal lip portion is in contact with the crankshaft without a gap. Thus, in order to allow the oil to exist between the engine oil seal for automobiles and the crankshaft, it is required that the seal lip portion is deformed and the oil follows this deformation to enter between the seal lip portion and the crankshaft. The seal lip portion deforms following the rotation of the crankshaft. This means that the seal lip portion easily deforms when the crankshaft rotates at a high rotation speed, and thereby the oil easily enters between the components. In contrast, when the crankshaft rotates at a low rotation speed, the seal lip portion is less likely to deform in comparison with the case of high rotation speed, and thereby the oil is less likely to enter between the crankshaft and the seal lip portion.

Consequently, the sliding properties is poorer when the crankshaft rotates at a low rotation speed than when the crankshaft rotates at a high rotation speed, and engine oil seals for automobiles are desired to have improved sliding properties especially when the crankshaft rotates at a low rotation speed.

In contrast, the engine oil seal for automobiles of the present invention has protrusions including the specific fluororesin on the surface of the seal lip portion, as mentioned above. Thus, the oil seal microscopically has minute gaps between the seal lip portion and the crankshaft and the seal lip portion easily deforms following the rotation of the crankshaft while maintaining the fundamental function of preventing leakage of oil toward the outside of the engine.

Thus, an oil is likely to exist between the engine oil seal for automobiles of the present invention and the crankshaft, and the oil seal has excellent sliding properties at any rotation speed of the crankshaft throughout the rotation-speed range, from low-rotation-speed range to high-rotation-speed range.

The position of the engine oil seal for automobiles of the present invention to be used is not limited to the crankshaft and, if the engine has a camshaft, the oil seal may be used as an engine oil seal for automobiles slidable on the camshaft.

Preferably, the oil seal for automobiles of the present invention is a transmission oil seal for automobiles, wherein the seal lip portion has at least a main lip portion, and the elastic component has protrusions at least on the surface of the main lip portion.

Current requests of higher performance and lower fuel consumption of engines lead to a demand for better sliding properties of oil seals for automobiles. Especially, the transmission oil seal for automobiles is required to have improved sliding properties throughout the driving, from low-velocity driving to high-velocity driving.

The oil seal for automobiles of the present invention having the above structure can have excellent sliding properties throughout the driving, from low-velocity driving to high-velocity driving. Thus, the oil seal for automobiles of the present invention provides a very low torque in rotation, and is therefore suitable for a transmission oil seal for automobiles which is required to have low fuel consumption.

Therefore, the oil seal for automobiles of the present invention is particularly preferably a transmission oil seal for automobiles.

The following will describe embodiments of the transmission oil seal for automobiles referring to the drawings.

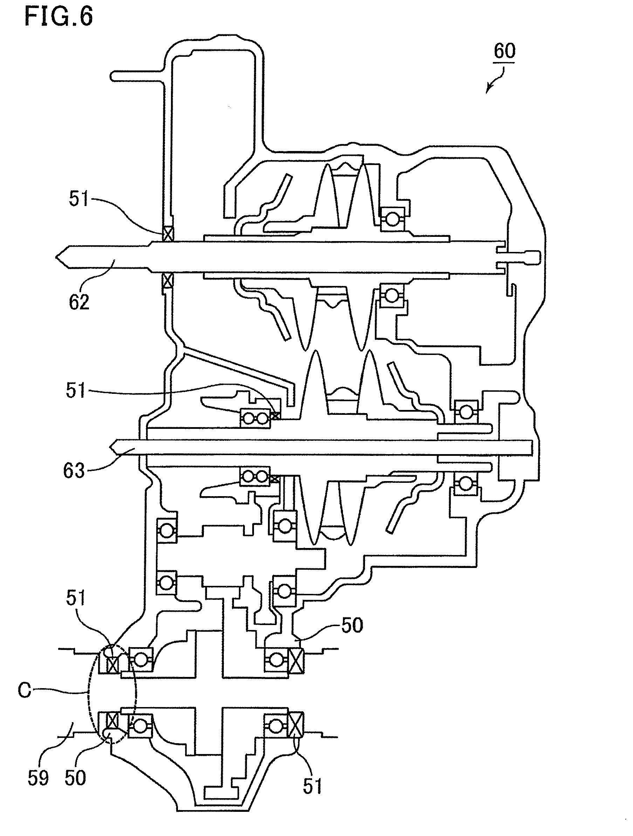

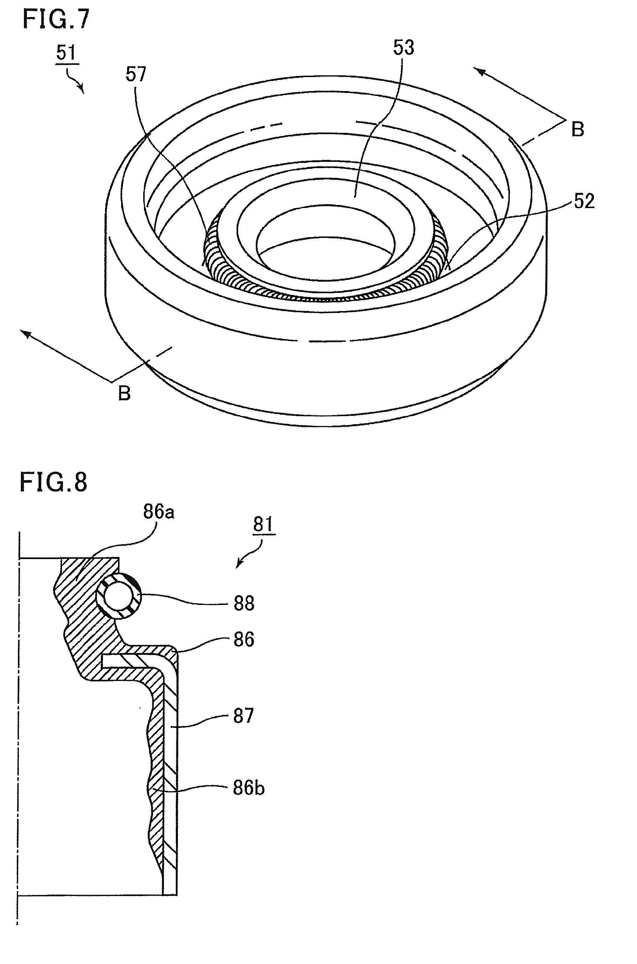

Fig. 5 is a cross-sectional view schematically showing a transmission oil seal for automobiles in use, and is an enlarged view of the region C shown in Fig. 6. Fig. 6 is a cross-sectional view schematically showing a transmission using a transmission oil seal for automobiles. Fig. 7 is a perspective view showing the transmission oil seal for automobiles shown in Fig. 5. The transmission oil seal for automobiles shown in Fig. 5 corresponds to the cross section along the B-B line in Fig. 7.

As shown in Figs. 5 to 7, a transmission oil seal 51 for automobiles has a circular structure whose cross-sectional shape in radial direction is substantially a U-shape (turned sideways), and includes an elastic component 52 which includes a composition containing fluororesin and fluororubber, a cyclic metal ring 56, and a ring spring 57.

The elastic component 52 has a seal lip portion on the internal circumference side and a fitting portion 54 on the outer circumference side. The seal lip portion includes a main lip portion 53 which has a wedge-shaped cross section in the radial direction and which is in contact with an axle 59, and the fitting portion is in close contact with a housing 50. The metal ring 56 is built in the elastic component 52, thereby reinforcing the transmission oil seal 51 for automobiles. The ring spring 57 is disposed on the outer circumference of the main lip portion 53, and the main lip portion 53 is made in contact with the axle 59 by the biasing force of the ring spring 57.

The transmission oil seal 51 for automobiles is press-fit between the axle 59 and the housing 50 such that the ring spring 57 is exposed toward the inside of a transmission 60, the main lip portion 53 is in slidable contact with the axle 59 of the transmission 60, and the fitting portion 54 is in close contact with the housing 50. In Fig. 6, the reference numerals 62 and 63 represent a main shaft (input shaft) configured to be connected to the crankshaft and a counter shaft (output shaft) disposed in parallel with the main shaft, respectively.

Also as shown in Fig. 6, the transmission oil seal 51 for automobiles is disposed such that it is slidable not only on the axle 59 but also on the main shaft 62 and the counter shaft 63.

The elastic component 52 of the engine oil seal 51 for automobiles includes a composition containing fluororesin and fluororubber, and the seal lip portion including the main lip portion 53 has protrusions on the surface thereof (see Fig. 1). In other words, the transmission oil seal 51 for automobiles has protrusions at portions in contact with the axle 59.

Owing to the above protrusions, the transmission oil seal 51 for automobiles has a less coefficient of friction with the shafts (axle, main shaft, counter shaft) and is excellent in sliding properties.

The simple term "shaft" hereinbelow includes an axle, a main shaft, and a counter shaft.

Such excellent sliding properties can be achieved at any rotation speed of the shaft throughout the rotation-speed range, from low-rotation-speed range to high-rotation-speed range. This is more specifically described below.

The material of the main lip portion 53 of the transmission oil seal 51 for automobiles is a composition containing fluororesin and fluororubber. Thus, it has better sliding properties than conventionally known materials of transmission oil seals for automobiles, such as nitrile rubber, acrylic rubber, and fluororubber which does not contain the aforementioned specific fluororesin.

In addition, the transmission oil seal 51 for automobiles has protrusions including the above composition.

When a transmission oil seal for automobiles is sliding on a shaft, it is known that an oil exists (an oil layer is formed) between the transmission oil seal for automobiles and the shaft. This oil is considered to serve as a lubricant between the components. In other words, the oil present therebetween allows the transmission oil seal for automobiles to slide with a low friction resistance.

In contrast, it is the basic assumption that the transmission oil seal for automobiles serve as a sealant. Thus, the seal lip portion is in contact with the shaft without a gap. Thus, in order to allow the oil to exist between the transmission oil seal for automobiles and the shaft, it is required that the seal lip portion is deformed and the oil follows this deformation to enter between the seal lip portion and the shaft. The seal lip portion deforms following the rotation of the shaft. This means that the seal lip portion easily deforms when the shaft rotates at a high rotation speed, and thereby the oil easily enters between the components. In contrast, when the shaft rotates at a low rotation speed, the seal lip portion is less likely to deform in comparison with the case of high rotation speed, and thereby the oil is less likely to enter between the shaft and the seal lip portion.

Consequently, the sliding properties is poorer when the shaft rotates at a low rotation speed than when the shaft rotates at a high rotation speed, and transmission oil seals for automobiles are desired to have improved sliding properties especially when the shaft rotates at a low rotation speed.

In contrast, the transmission oil seal for automobiles of the present invention has protrusions including the specific fluororesin on the surface of the seal lip portion, as mentioned above. Thus, the oil seal microscopically has minute gaps between the seal lip portion and the shaft and the seal lip portion easily deforms following the rotation of the shaft while maintaining the fundamental function of preventing leakage of oil toward the outside of the transmission.

Thus, an oil is likely to exist between the transmission oil seal for automobiles of the present invention and the shaft, and the oil seal has excellent sliding properties at any rotation speed of the shaft throughout the rotation-speed range, from low-rotation-speed range to high-rotation-speed range.

The oil seal for automobiles of the present invention is also preferably a valve stem seal for automobiles disposed at an end of the valve stem guide of an engine, wherein the seal lip portion is in slidable contact with the valve stem of the engine.

Current requests of higher performance (higher rotation speed) and lower fuel consumption of engines lead to a demand for better sliding properties of valve stem seals for automobiles. Especially, the valve stem seal for automobiles is required to have improved sliding properties. The valve stem seal is also required to have excellent abrasion resistance for improved durability under low-level leakage.

The oil seal for automobiles of the present invention having the above structure can have excellent sliding property, as well as excellent abrasion resistance. Thus, the oil seal for automobiles of the present invention is suitable for a valve stem seal for automobiles. Therefore, the oil seal for automobiles of the present invention is particularly preferably a valve stem seal for automobiles.

The following will describe embodiments of the valve stem seal for automobiles referring to the drawings.

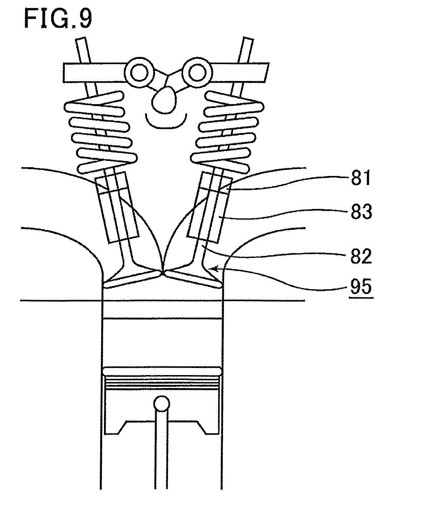

Fig. 9 is a cross-sectional view schematically showing a valve stem seal for automobiles in use, and is an enlarged view of the region B shown in Fig. 3. Fig. 3 is a cross-sectional view schematically showing an engine using the valve stem seal for automobiles of the present invention. Fig. 8 is a cross-sectional view showing the valve stem seal for automobiles shown in Fig. 9.

As shown in Figs. 8 and 9, the valve stem seal 81 for automobiles of the present invention has an attach ring 87 so that the valve stem seal can be attached to one end of a valve stem guide 83 in the axis direction (see Fig. 9). To the attach ring 87 was bonded an elastic component 86 containing fluororesin and fluororubber.

The elastic component 86 includes a seal lip portion 86a in close contact with the outer circumference of a valve stem 82 and a static seal portion 86b in close contact with the outer circumference of a valve stem guide 83. A spring 88 disposed around the seal lip portion 86a gives a tension against the valve stem 82.

Next, the following will describe a method of producing the oil seal for automobiles of the present invention.

The elastic component of the oil seal for automobiles of the present invention can be produced by cross-linking a cross-linkable composition containing non-cross-linked fluororubber and fluororesin. In particular, the oil seal for automobiles of the present invention is preferably one produced by the following production method.

The oil seal for automobiles of the present invention can be obtained by producing an elastic component having a predetermined shape through a process including the steps of:
(I) mixing fluororesin and non-cross-linked fluororubber;
(II) cross-linking and molding the resulting mixture; and
(III) heating the resulting cross-linked molded product to a temperature not lower than the melting point of the fluororesin,
and then, if necessary, incorporating components such as a metal ring and an attach ring, and disposing a ring spring.

The non-cross-linked fluororubber is a fluororubber before cross-linking.

### (I) Mixing

The cross-linkable composition may be produced by any method capable of uniformly mixing non-cross-linked fluororubber and fluororesin. Examples thereof include mixing of non-cross-linked fluororubber powder and fluororesin powder each separately prepared by coagulation; melt-kneading of non-cross-linked fluororubber and fluororesin; and co-coagulation of non-cross-linked fluororubber and fluororesin. Preferred is melt-kneading of non-cross-linked fluororubber and fluororesin or co-coagulation of non-cross-linked fluororubber and fluororesin.

The melt-kneading and co-coagulation are described below.

### (Melt-kneading)

The melt-kneading of non-cross-linked fluororubber and fluororesin is performed at a temperature equal to or higher than the temperature 5°C lower than the melting point of the fluororesin, preferably at a temperature not lower than the melting point of the fluororesin. The upper limit of the heating temperature is below the lower one of the pyrolysis temperatures of non-cross-linked fluororubber and fluororesin.

The melt-kneading is not performed in the conditions which cause cross-linking at that temperature (for example, in the presence of a cross-linker, a cross-linking accelerator, and an acid acceptor). However, any of components (e.g. a specific cross-linker alone, combination of only a cross-linker and a cross-linking accelerator) which cause no cross-linking at a melt-kneading temperature which is not lower than the temperature 5°C lower than the melting point of the fluororesin may be added during the melt-kneading. Examples of the conditions causing cross-linking include combination use of a polyol cross-linker, a cross-linking accelerator, and an acid acceptor.

Thus, the melt-kneading is preferably performed in a two-stage kneading manner such that non-cross-linked fluororubber and fluororesin are melt-kneaded to prepare a pre-compound (pre-mixture), and then the pre-compound is mixed with other additives and compounding agents at a temperature lower than the cross-linking temperature to prepare a full compound (cross-linkable composition). It may of course be possible to knead all the components at a temperature lower than the cross-linking temperature of the cross-linker.

The melt-kneading of fluororubber and fluororesin may be performed at a temperature not lower than the temperature 5°C lower than the melting point of the fluororesin (e.g. 180°C or higher, usually 220°C to 300°C) using a Banbury mixer, a pressure kneader, an extruder, or the like. It is preferable to use a pressure kneader or an extruder such as a twin-screw extruder because such a device can apply a high shearing force.

In two-stage kneading, the full compound may be prepared at a temperature lower than the cross-linking temperature (e.g. 100°C or lower) using an open roll, a Banbury mixer, a pressure kneader, or the like.

One treatment similar to the melt-kneading is a treatment of cross-linking fluororubber in fluororesin in the conditions for melting the fluororesin (dynamic cross-linking). The dynamic cross-linking is a method in which non-cross-linked rubber is blended into the matrix of thermoplastic resin and the non-cross-linked rubber is cross-linked under kneading, and the cross-linked rubber is micro-dispersed in the matrix. This treatment essentially differs from the melt-kneading in that the melt-kneading is performed in the conditions causing no cross-linking (e.g. in the absence of components required for cross-linking, or composition which is not cross-linked at that temperature), and that the matrix of the mixture in melt-kneading is non-cross-linked rubber and the fluororesin is uniformly dispersed in the non-cross-linked rubber.

### (Co-coagulation)

The mixing is preferably performed such that non-cross-linked fluororubber and fluororesin are co-coagulated to prepare a coagulated product, and then a cross-linkable composition containing the coagulated product is obtained.

A cross-linkable composition containing the coagulated product enables to form protrusions more uniformly and finely on the surface of the seal lip portion, and to increase the proportion (occupancy) by area of the region having protrusions more sufficiently. This results in an oil seal for automobiles having better sliding property.

For the cross-linkable composition containing a coagulated product obtained by co-coagulating non-cross-linked fluororubber and fluororesin, the non-cross-linked fluororubber and the fluororesin are assumed to be uniformly dispersed in the cross-linkable composition. Cross-linking and heating of such a cross-linkable composition presumably provide the oil seal for automobiles of the present invention having excellent sliding property.

Examples of the co-coagulation method include (i) coagulation after mixing an aqueous dispersion of non-cross-linked fluororubber and an aqueous dispersion of fluororesin; (ii) coagulation after adding powder of non-cross-linked fluororubber to an aqueous dispersion of fluororesin; and (iii) coagulation after adding powder of fluororesin to an aqueous dispersion of non-cross-linked fluororubber. The co-coagulation method is preferably the method (i) because the non-cross-linked fluororubber and the fluororesin are easily uniformly dispersed.

The coagulation in the coagulation methods (i) to (iii) may be performed using a coagulant. Any coagulant may be used, and examples thereof include known coagulants, including aluminum salts such as aluminum sulfate and alum; calcium salts such as calcium sulfate; magnesium salts such as magnesium sulfate and magnesium chloride, and monovalent cation salts such as sodium chloride and potassium chloride. In coagulation using a coagulant, an acid or alkali may be added to adjust the pH, thereby accelerating the coagulation.

The coagulated product obtainable by co-coagulating non-cross-linked fluororubber and fluororesin may be obtained by mixing an aqueous dispersion of non-cross-linked fluororubber and an aqueous dispersion of fluororesin, coagulating the mixture, collecting the coagulated product, and optionally drying the coagulated product.

Some cross-linking systems for non-cross-linked fluororubber require a cross-linker. Thus, a cross-linker may be added to the coagulated product obtained by co-coagulating non-cross-linked fluororubber and fluororesin, thereby providing a cross-linkable composition. The cross-linkable composition may contain a cross-linker to be used in each cross-linking system. It may also contain any of the aforementioned additives.

In a usual manner, a cross-linker is first added to the coagulated product, and then the coagulated product and the cross-linker are mixed with each other. The mixing may be performed at a temperature lower than the melting point of the fluororesin by a usual mixing method using, for example, a kneader.

The cross-linking system for non-cross-linked fluororubber is preferably at least one selected from the group consisting of a peroxide cross-linking system and a polyol cross-linking system. The peroxide cross-linking system is preferred from the viewpoint of chemical resistance, whereas the polyol cross-linking system is preferred from the viewpoint of heat resistance.

Thus, the cross-linker is preferably at least one cross-linker selected from the group consisting of polyol cross-linkers and peroxide cross-linkers.

The amount of the cross-linker may be appropriately adjusted in accordance with the type of cross-linker. It is preferably 0.2 to 5.0 parts by mass, and more preferably 0.3 to 3.0 parts by mass, for 100 parts by mass of the non-cross-linked fluororubber.

Peroxide cross-linking can be performed using peroxide-cross-linkable non-cross-linked fluororubber and an organic peroxide as a cross-linker.

Any peroxide-cross-linkable non-cross-linked fluororubber may be used as long as it is a non-cross-linked fluororubber having a peroxide-cross-linkable moiety. Any peroxide-cross-linkable moiety may be used, and examples thereof include iodine-containing moieties and bromine-containing moieties.

The organic peroxide may be any organic peroxide easily capable of generating peroxy radicals in the presence of a heat or oxidation-reduction system. Examples thereof include
1,1-bis(t-butylperoxy)-3,5,5-trimethylcyclohexane,
2,5-dimethylhexane-2,5-dihydroperoxide, di-t-butyl peroxide, t-butylcumyl peroxide, dicumyl peroxide,
α,α-bis(t-butylperoxy)-p-diisopropylbenzene,
2,5-dimethyl-2,5-di(t-butylperoxy)hexane,
2,5-dimethyl-2,5-di(t-butylperoxy)-hexyne-3, benzoyl peroxide, t-butylperoxy benzene, t-butylperoxy maleate, t-butylperoxyisopropyl carbonate, and t-butylperoxy benzoate. Preferable are
2,5-dimethyl-2,5-di(t-butylperoxy)hexane and
2,5-dimethyl-2,5-di(t-butylperoxy)-hexyne-3.

The amount of the organic peroxide is preferably 0.1 to 15 parts by mass, more preferably 0.3 to 5 parts by mass, for 100 parts by mass of the non-cross-linked fluororubber.

In the case of using an organic peroxide as a cross-linker, the cross-linkable composition preferably further contains a cross-linking aid. Examples of the cross-linking aid include triallyl cyanurate, triallyl isocyanurate (TAIC), triacrylformal, triallyl trimellitate, N,N'-m-phenylene bismaleimide, dipropargyl terephthalate, diallyl phthalate, tetraallyl terephthalate amide, triallyl phosphate, bismaleimide, fluorinated triallyl isocyanurate (1,3,5-tris(2,3,3-trifluoro-2-propenyl)-1,3,5-triazine-2,4,6-trione), tris(diallylamine)-S-triazine, N,N-diallyl acrylamide, 1,6-divinyldodecafluorohexane, hexaallyl phosphoramide, N,N,N',N'-tetraallylphthalamide, N,N,N',N'-tetraallylmalonamide, trivinyl isocyanurate, 2,4,6-trivinylmethyltrisiloxane, tri(5-norbornene-2-methylene)cyanurate, and triallyl phosphite. Preferable is triallyl isocyanurate (TAIC) because it is excellent in cross-linkability, mechanical properties, and sealability.

The amount of the cross-linking aid is preferably 0.01 to 10 parts by mass, more preferably 0.01 to 7.0 parts by mass, and still more preferably 0.1 to 5.0 parts by mass, for 100 parts by mass of the non-cross-linked fluororubber. Less than 0.01 parts by mass of the cross-linking aid may deteriorate the mechanical properties and the sealability, whereas more than 10 parts by mass thereof tends to deteriorate the heat resistance and the durability of the oil seal for automobiles.

Polyol-cross-linking can be performed using polyol-cross-linkable non-cross-linked fluororubber and a polyhydroxy compound as a cross-linker. The amount of the polyhydroxy compound in the polyol cross-linking system is preferably 0.01 to 8 parts by mass for 100 parts by mass of the polyol-cross-linkable non-cross-linked fluororubber. The polyhydroxy compound in an amount within such a range sufficiently promotes polyol-cross-linking. The amount is more preferably 0.02 to 5 parts by mass.

Any polyol-cross-linkable non-cross-linked fluororubber may be used as long as it is a non-cross-linked fluororubber having a polyol-cross-linkable moiety. The polyol-cross-linkable moiety is not particularly limited, and examples thereof include moieties having a vinylidene fluoride (VdF) unit. The cross-linked moiety may be introduced by, for example, a method of copolymerizing a monomer that gives a cross-linked moiety in polymerization of non-cross-linked fluororubber.

The polyhydroxy compound is preferably a polyhydroxy aromatic compound in terms of excellent heat resistance.

Any polyhydroxy aromatic compound may be used, and examples thereof include 2,2-bis(4-hydroxyphenyl)propane (hereinafter, referred to as bisphenol A),
2,2-bis(4-hydroxyphenyl)perfluoropropane (hereinafter, referred to as bisphenol AF), resorcin,
1,3-dihydroxybenzene, 1,7-dihydroxynaphthalene,
2,7-dihydroxynaphthalene, 1,6-dihydroxynaphthalene,
4,4'-dihydroxydiphenyl, 4,4'-dihydroxystilbene,
2,6-dihydroxyanthracene, hydroquinone, catechol,
2,2-bis(4-hydroxyphenyl)butane (hereinafter, referred to as bisphenol B), 4,4-bis(4-hydroxyphenyl)valerate,
2,2-bis(4-hydroxyphenyl)tetrafluorodichloropropane,
4,4'-dihydroxydiphenyl sulfone, 4,4'-dihydroxydiphenyl ketone, tri(4-hydroxyphenyl)methane, 3,3',5,5'-tetrachloro bisphenol A, and 3,3',5,5'-tetrabromobisphenol A. Each of these polyhydroxy aromatic compounds may be in the form of an alkali metal salt or an alkaline earth metal salt. In the case of using an acid for coagulating a copolymer, it is preferable to use no metal salt. The amount of the polyhydroxy aromatic compound is 0.1 to 15 parts by mass, preferably 0.5 to 5 parts by mass, for 100 parts by mass of the non-cross-linked fluororubber.

For a polyhydroxy compound as a cross-linker, the cross-linkable composition preferably further contains a cross-linking accelerator. The cross-linking accelerator promotes formation of an intramolecular double bond by dehydrofluorination of the polymer main chain and addition of a polyhydroxy compound to the generated double bond.

The cross-linking accelerator may be combined with an acid acceptor (e.g. magnesium oxide) or a cross-linking aid (e.g. calcium hydroxide).

Examples of the cross-linking accelerator include onium compounds. The cross-linking accelerator is preferably at least one onium compound selected from the group consisting of ammonium compounds such as quaternary ammonium salts, phosphonium compounds such as quaternary phosphonium salts, oxonium compounds, sulfonium compounds, cyclic amines, and monofunctional amine compounds. It is more preferably at least one selected from the group consisting of quaternary ammonium salts and quaternary phosphonium salts.

Any quaternary ammonium salts may be used, and examples thereof include
8-methyl-1,8-diazabicyclo[5,4,0]-7-undecenium chloride,
8-methyl-1,8-diazabicyclo[5,4,0]-7-undecenium iodide,
8-methyl-1,8-diazabicyclo[5,4,0]-7-undecenium hydroxide,
8-methyl-1,8-diazabicyclo[5,4,0]-7-undecenium methyl
sulfate, 8-ethyl-1,8-diazabicyclo[5,4,0]-7-undecenium
bromide, 8-propyl-1,8-diazabicyclo[5,4,0]-7-undecenium
bromide, 8-dodecyl-1,8-diazabicyclo[5,4,0]-7-undecenium
chloride, 8-dodecyl-1,8-diazabicyclo[5,4,0]-7-undecenium
hydroxide, 8-eicosyl-1,8-diazabicyclo[5,4,0]-7-undecenium
chloride, 8-tetracosyl-1,8-diazabicyclo[5,4,0]-7-undecenium
chloride, 8-benzyl-1,8-diazabicyclo[5,4,0]-7-undecenium
chloride (hereinafter, referred to as DBU-B),
8-benzyl-1,8-diazabicyclo[5,4,0]-7-undecenium hydroxide,
8-phenethyl-1,8-diazabicyclo[5,4,0]-7-undecenium chloride,
and 8-(3-phenylpropyl)-1,8-diazabicyclo[5,4,0]-7-undecenium chloride. Preferable is DBU-B in terms of cross-linkability, mechanical properties, and sealability.

Any quaternary phosphonium salts may be used, and examples thereof include tetrabutylphosphonium chloride, benzyltriphenylphosphonium chloride (hereinafter, referred to as BTPPC), benzyltrimethylphosphonium chloride, benzyltributylphosphonium chloride, tributylallylphosphonium chloride, tributyl-2-methoxypropylphosphonium chloride, and benzylphenyl(dimethylamino)phosphonium chloride. Preferable is benzyltriphenylphosphonium chloride (BTPPC) in terms of cross-linkability, mechanical properties, and sealability.

The cross-linking accelerator may be a solid solution of a quaternary ammonium salt and bisphenol AF, a solid solution of a quaternary phosphonium salt and bisphenol AF, and a chlorine-free cross-linking accelerator disclosed in JP H11-147891 A.

The amount of the cross-linking accelerator is preferably 0.01 to 8 parts by mass, and more preferably 0.02 to 5 parts by mass, for 100 parts by mass of the non-cross-linked fluororubber. Less than 0.01 parts by mass of the cross-linking accelerator may insufficiently promote the cross-linking of non-cross-linked fluororubber, deteriorating the properties such as heat resistance of the oil seal for automobiles to be obtained. More than 8 parts by mass thereof tends to deteriorate the mold-processability of the cross-linkable composition, to decrease the elongation among the mechanical properties, and to deteriorate the sealability.

In order to improve the compatibility between fluororesin and non-cross-linked fluororubber, the cross-linkable composition may contain at least one polyfunctional compound. The polyfunctional compound is a compound having two or more functional groups in a molecule, the functional groups having the same structure or different structures.

Any functional groups which are commonly known to have reactivity may be used as the functional groups in the polyfunctional compound, and examples thereof include a carbonyl group, a carboxyl group, a haloformyl group, an amide group, an olefin group, an amino group, an isocyanate group, a hydroxy group, and an epoxy group.

A compound having these functional groups not only has high affinity with non-cross-linked fluororubber but also reacts with a functional group which is known to have reactivity in fluororesin. In addition, it is expected to improve the compatibility.

The cross-linkable composition containing non-cross-linked fluororubber and fluororesin preferably satisfies the ratio {(non-cross-linked fluororubber)/(fluororesin)} by volume of 60/40 to 95/5. If the amount of the fluororesin is too small, the oil seal for automobiles of the present invention may fail to have sufficient sliding property. If the amount of the fluororesin is too large, the rubber elasticity may deteriorate. The ratio {(non-cross-linked fluororubber)/(fluororesin)} is more preferably 65/35 to 95/5, and still more preferably 70/30 to 90/10, because such a ratio provides good flexibility owing to the fluororubber and good sliding property owing to the fluororesin.

The cross-linkable composition may contain any of usual additives to be blended into non-cross-linked fluororubber as appropriate. Examples of such additives include fillers, processing aids, plasticizers, colorants, stabilizers, adhesive aids, release agents, electroconductivity-imparting agents, thermal-conductivity-imparting agents, surface non-adhesive agents, flexibility-imparting agents, heat-resistance improvers, and flame retarders. These additives are used to the extent that they do not deteriorate the effects of the present invention.

### (II) Molding and cross-linking

This step includes molding and cross-linking the mixture obtained in the mixing step to produce a cross-linked molded product having substantially the same shape as that of the elastic component to be produced.

The order of molding and cross-linking is not limited. It may be possible to perform molding first and then perform cross-linking, or first cross-linking and then molding. It may also be possible to simultaneously perform molding and cross-linking.

The molding may be performed by, for example, press molding using a mold or injection molding, but the molding method is not limited thereto.

The cross-linking may be performed by, for example, steam cross-linking, a usual method of starting cross-linking by heating, or radiation cross-linking. Preferable is cross-linking by heating.

In the present invention, cross-linking by heat is preferred because the fluororesin smoothly transfers to the surface layer of the cross-linkable composition.

The cross-linking temperature is not lower than the cross-linking temperature of the non-cross-linked fluororubber, and is preferably lower than the melting point of the fluororesin. Cross-linking at a temperature of not lower than the melting point of the fluororesin may fail to provide a molded product having many protrusions.

The cross-linking temperature is more preferably not higher than the temperature 5°C or more lower than the melting point of the fluororesin because such a temperature makes it possible to form protrusions including the fluororesin on the surface of the cross-linked molded product through the heating to be mentioned later. The lower limit of the cross-linking temperature is the cross-linking temperature of the non-cross-linked fluororubber.

Non-limitative specific cross-linking conditions may include a temperature range of 150 to 250°C and a cross-linking time of 1 minute to 24 hours. The conditions may be appropriately adjusted in accordance with factors such as the type of cross-linker.

Methods and conditions for molding and cross-linking may be within the range of known methods and conditions for molding and cross-linking to be performed. Molding and cross-linking may be performed in any order, and may be simultaneously performed.

In some cases, a post-treatment called secondary cross-linking is performed after the first cross-linking (primary cross-linking) in the cross-linking of non-cross-linked rubber. As will be mentioned in the following section of "(III) Heating", a conventional secondary cross-linking is a different treatment from the molding and cross-linking (II) and the heating (III) of the present invention.

In production, as the oil seal for automobiles, of an engine oil seal for automobiles or a transmission oil seal for automobiles provided with a metal ring, the metal ring may be preliminarily placed in a mold and integrated into the product in this step. Also in production of a valve stem seal for automobiles, an attach ring may be preliminarily placed in a mold and integrated into the product.

### (III) Heating

This heating step (III) includes heating the resulting cross-linked molded product to a temperature not lower than the melting point of the fluororesin. The heating (III) enables to form protrusions (mainly including the fluororesin) on the surface of an elastic component to be produced.

The heating (III) in the present invention is a step for increasing the proportion of the fluororesin on the surface of the cross-linked molded product. In order to achieve this purpose, the heating temperature is not lower than the melting point of the fluororesin but lower than the pyrolysis temperatures of the fluororubber and the fluororesin.

If the heating temperature is lower than the melting point of the fluororesin, protrusions may be insufficiently formed on the surface of the cross-linked molded product, and the proportion of the fluororesin insufficiently increases. In order to avoid pyrolysis of the fluororubber and the fluororesin, the heating temperature is required to be below the lower one of the pyrolysis temperatures of the fluororubber and the fluororesin. The heating temperature is preferably a temperature 5°C or more higher than the melting point of the fluororesin in order to easily make the friction low in a short time.

In the heating (III), the heating temperature closely correlates with the heating time. With a heating temperature that is relatively close to the lower limit, the heating is preferably performed for a relatively long time; with a heating temperature that is relatively close to the upper limit, the heating is preferably performed for a relatively short time.

As mentioned above, the heating time may be appropriately adjusted depending on the heating temperature. Still, too long a heating treatment may cause heat degradation of the fluororubber. Thus, the heating time is practically up to 96 hours except the case of using fluororubber that is excellent in heat resistance.

In general, the heating time is preferably 1 minute to 72 hours, more preferably 1 minute to 48 hours, and still more preferably 1 minute to 24 hours for good productivity. It is also preferably 12 hours or longer from the viewpoint of providing an oil seal for automobiles having better sliding property.

The elastic component produced through the steps (I) to (III) has protrusions on the entire surface thereof. In the oil seal for automobiles of the present invention, no protrusions may be formed on the surfaces of portions other than the seal lip portion of the elastic component as long as the protrusions are formed at least on the surface of the seal lip portion. In order to produce such an elastic component, for example, the protrusions on the portions which require no protrusions may be removed by, for example, grinding after the step (III).

Conventional secondary cross-linking is a treatment for completely decomposing the cross-linker remaining after the primary cross-linking to complete the cross-linking of fluororubber, thereby improving the mechanical properties and the compression set of the cross-linked molded product.

Thus, although the conventional secondary cross-linking conditions (heating conditions), which do not suppose the existence of fluororesin, accidentally correspond to the heating conditions of the heating step, the conditions are just employed so as to complete the cross-linking of non-cross-linked fluororubber (completely decompose the cross-linker) without considering the existence of the fluororesin in the secondary cross-linking as a factor of setting the cross-linking conditions. Therefore, in the case of blending fluororesin, it is impossible to lead to the conditions for heat-softening or melting the fluororesin in a cross-linked rubber product (which is not a non-cross-linked rubber product).

In the molding and cross-linking (II), secondary cross-linking may be performed so as to complete the cross-linking of non-cross-linked fluororubber (completely decompose the cross-linker).

In the heating (III), the remaining cross-linker may be decomposed, thereby completing the cross-linking of the non-cross-linked fluororubber in some cases. Still, such cross-linking of the non-cross-linked fluororubber in the heating (III) is just a side effect.

The heating (III) may be followed by a step of disposing a ring spring as appropriate.

For the oil seal for automobiles produced by a method including the steps of mixing (I), molding and cross-linking (II), and heating (III), presumably, the elastic component has protrusions formed on the surface thereof and the proportion of the fluororesin increases in the surface region (including the inside of the protrusions) as a result of transfer of the fluororesin to the surface.

In particular, the mixture obtained in the mixing (I) presumably has a structure in which the non-cross-linked fluororubber forms a continuous phase and the fluororesin forms a dispersing phase, or a structure in which the non-cross-linked fluororubber and the fluororesin each form a continuous phase. Formation of such a structure allows for smooth cross-linking in the molding and cross-linking (II), uniform cross-linking of the cross-linked product to be obtained, and smooth transfer of the fluororesin to the surface in the heating (III), resulting in the surface with an increased proportion of the fluororesin.

In order to allow the fluororesin to transfer to the surface layer smoothly, it is particularly excellent that the heating is performed at a temperature of not lower than the melting point of the fluororesin.

The state that the proportion of the fluororesin is increased on the surface region of the oil seal for automobiles can be verified by chemical analysis, such as ESCA or IR analysis, of the surface of the elastic component.

For example, ESCA can identify the atomic groups present between the surface and a depth of about 10 nm of the oil seal for automobiles. After the heating, the ratio (P_{ESCA}1/P_{ESCA}2) between the peak (P_{ESCA}1) of the bond energy assigned to the fluororubber and the peak (P_{ESCA}2) assigned to the fluororesin is smaller than that before the heating; in other words, the number of atomic groups in the fluororesin increases.

IR analysis can identify the atomic groups present between the surface and a depth of about 0.5 to 1.2 µm of the oil seal for automobiles. After the heating, the ratio (P_{IR0.5}1/P_{IR0.5}2) between the peak (P_{IR0.5}1) of characteristic absorption assigned to the fluororubber and the peak (P_{IR0}.₅2) assigned to the fluororesin at a depth of 0.5 µm is smaller than that before the heating; in other words, the number of atomic groups in the fluororesin increases. Further, the comparison between the ratio (P_{IR0}.₅1/P_{IR0.5}2) at a depth of 0.5 µm and the ratio (P_{IR1.2}1/P_{IR1.2}2) at a depth of 1.2 µm shows that the ratio (P_{IR0}.₅1/P_{IR0.5}2) at a depth of 0.5 µm is smaller. This indicates that the proportion of the fluororesin is higher at regions closer to the surface.

The fluororubber whose surface is modified by application or bonding of fluororesin has no protrusions that characterize the oil seal for automobiles of the present invention. Thus, the oil seal for automobiles having protrusions which are formed by precipitation of the specific fluororesin in the composition on the surface as shown herein is a novel oil seal for automobiles that has never seen.

### EXAMPLES

The present invention will be described hereinbelow referring to, but not limited to, examples.

The properties herein were measured by the following methods.

### (1) Monomer composition of fluororesin

The monomer composition of the fluororesin was determined by ¹⁹F-NMR using a nuclear magnetic resonance device AC300 (Bruker-Biospin) at a measurement temperature of (melting point of polymer + 50°C).

### (2) Melting point of fluororesin

The calorimetry was performed using a differential scanning calorimeter RDC220 (Seiko Instruments Inc.) in conformity with ASTM D-4591 at a temperature-increasing rate of 10°C/min. As the temperature once reached the point of (heat absorption completion temperature + 30°C), which corresponds to the peak of the melting point, the temperature was lowered to 50°C at a temperature-decreasing rate of -10°C/min, and then the temperature was re-increased to the point of (heat absorption completion temperature + 30°C) at a temperature-increasing rate of 10°C/min. The melting point was determined based on the peak of the heat-absorption curve obtained.

### (3) Melt flow rate (MFR) of fluororesin

The MFR was determined as follows. A polymer was ejected from a nozzle having an inner diameter of 2 mm and a length of 8 mm for 10 minutes at a temperature of 280°C or 327°C and a load of 5 kg using a melt indexer (Toyo Seiki Seisaku-sho, Ltd.) in conformity with ASTM D3307-01. The amount (g/10 min) of the polymer ejected was defined as the MFR.

### (4) Storage elastic modulus (E') of fluororesin

The storage elastic modulus is a value determined by dynamic viscoelasticity measurement at 70°C on a sample having a length of 30 mm, a width of 5 mm, and a thickness of 0.25 mm using a dynamic viscoelasticity analyzer DVA220 (IT KEISOKU SEIGYO K.K.) in a tensile mode at a grip width of 20 mm, a measurement temperature of from 25°C to 200°C/min, and a frequency of 1 Hz.

### (5) Cross-linkability (vulcanizability)

The minimum torque (ML), maximum torque (MH), induction time (T10), and optimal scorch time (T90) were measured using a curelastometer type II (JSR Corp.).

### (6) 100% Modulus (M100)

This value was measured in conformity with JIS K6251.

### (7) Tensile strength at break (Tb)

This value was measured in conformity with JIS K6251.

### (8) Tensile elongation at break (Eb)

This value was measured in conformity with JIS K6251.

### (9) Hardness (Shore A)

This value was measured using a durometer type A in conformity with JIS K6253 (peak value).

### (10) Compression set

The compression set after 70-hour test at 200°C was measured in conformity with JIS K6262.

### (11) Proportion of area of region having protrusions, heights of protrusions, bottom cross-sectional area of protrusions, and number of protrusions

The proportion of the area of the region having protrusions, the heights of protrusions, the bottom cross-sectional areas of protrusions, the number of protrusions, and the like were calculated using a color 3D laser microscope (VK-9700, Keyence Corp.) and WinRooF Ver. 6.4.0 (MITANI CORP.) as an analysis software. The proportion of the area of the region having protrusions was determined as the proportion of the sum of the bottom cross-sectional areas of the protrusions to the whole area measured. The number of protrusions was the number of protrusions within the measurement area in terms of the number per mm².

### (12) Measurement of rotational torques of engine oil seal and transmission oil seal

The rotational torque of the oil seal for automobiles was measured as follows.

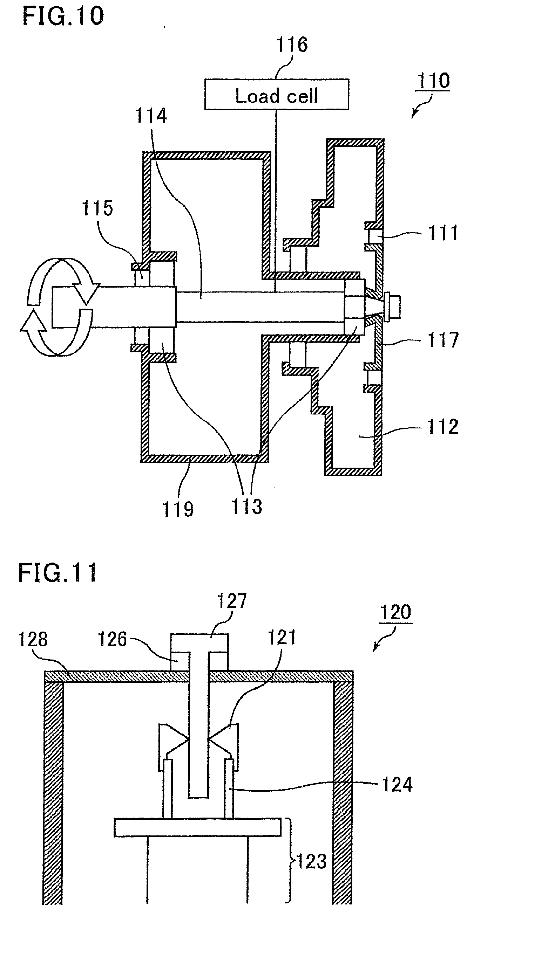

Fig. 10 is a schematic view showing an oil seal torque meter used.

An oil seal torque meter 110 shown in Fig. 10 is provided with a shaft 114 which is rotatably disposed in a housing 119 through bearings 113. An oil chamber 112 and an oil seal holder 117 are disposed on the tip side (the right side in Fig. 10) of the shaft 114. An oil seal 111 for measurement is fixed between the oil chamber 112 and the oil seal holder 117 so as to be slidable on the oil seal holder 117. A load cell 116 is connected to the oil chamber 112. In Fig. 10, the reference numeral 115 indicates an oil seal.

As the shaft 114 is rotated by a motor (not shown) at a predetermined rotation speed with the oil seal 111 for measurement being attached and with the oil chamber being set to a predetermined temperature (oil temperature), the oil seal holder 117 rotates together with the shaft 114 in an integrated manner and slides on the oil seal 111 for measurement. The load cell 116 measures the load on the oil seal 111 for measurement at this time, and the load is multiplied by the radius of gyration to be converted into a torque.

For the measurement conditions, the oil temperature (test temperature) was normal temperature and the rotation speed of the shaft 114 was 2000 rpm or 5000 rpm.

### (13) Measurement of stroke load of valve stem seal

The stroke load of the valve stem seal for automobiles was measured as follows.

Fig. 11 is a schematic view showing the stroke load tester used.

A stroke load tester 120 shown in Fig. 11 is provided with a vibration generator 123 and a valve guide 124 disposed thereon. A valve stem seal 121 for measurement was fixed on the tip side of the valve guide 124 so as to be slidable on a valve stem shaft 127. The valve stem shaft 127 was fixed on a support 128 via a load cell 126.

As the valve guide 124 is reciprocated by the vibration generator 123 at a predetermined reciprocating speed, the valve stem seal 121 for measurement reciprocates, being in close contact with the valve stem shaft 127. The load cell 126 measures the load (stroke load) applied to the valve stem shaft 127 at that time.

For the measurement conditions, the temperature was normal temperature and the reciprocating speed of the vibration generator 123 was 9.6 cpm or 350 cpm.

The materials shown in the tables and the description are listed below.

### Cross-linker

Bisphenol AF, special grade (Wako Pure Chemical Industries, Ltd.)
BTPPC, special grade (Wako Pure Chemical Industries, Ltd.)

### Cross-linking aid

MgO (magnesium oxide, MA 150, Kyowa Chemical Industry Co., Ltd.)
Calcium hydroxide (CALDIC 2000, Ohmi Chemical Industry Co., Ltd.)

### Filler

Carbon black (MT CARBON (N990), Cancarb)

### Fluororubber (A)

Aqueous dispersion of copolymer fluororubber (DAIKIN INDUSTRIES, Ltd., solids content: 26% by mass, fluororubber: VdF/HFP copolymer, VdF/HFP = 78/22 (ratio by mole)) (fluororubber dispersion (A))

### Fluororesin (B1)

Aqueous dispersion of NEOFLON FEP (TFE/HFP copolymer, DAIKIN INDUSTRIES, Ltd., solids content: 21% by mass, MFR: 31.7 g/10 min (327°C, 5 kg measurement), melting point: 215°C, storage elastic modulus (E'): 167 MPa, TFE/HFP = 87.9/12.1 (ratio by mole)) (fluororesin dispersion (B1))

### Fluororesin (B2)

Aqueous dispersion of NEOFLON FEP (TFE/HFP copolymer, DAIKIN INDUSTRIES, Ltd., solids content: 20.1% by mass, MFR: 7.5 g/10 min (280°C, 5 kg measurement), melting point: 186°C, storage elastic modulus (E'): 59 MPa, TFE/HFP = 84.7/15.3 (ratio by mole)) (fluororesin dispersion (B2))

### Fluororesin (C)

NEOFLON ETFE (Et/TFE copolymer, trade name: EP-610, DAIKIN INDUSTRIES, Ltd.)

### (Preparation of cross-linkable composition 1)

Water (500 mL) and magnesium chloride (4 g) were preliminarily mixed to provide a solution. The fluororesin dispersion (B1) and the fluororubber dispersion (A) were added to this solution to provide a solution with a ratio (fluororubber/fluororesin) by volume of 75/25 (solids content). Then, 400 mL of this solution was charged into a 1-L mixer and mixed for 5 minutes, so that the solids were co-coagulated.

The co-coagulated solids were collected, dried at 120°C for 24 hours in a drying furnace, and mixed with a predetermined composition shown in Table 1 using an open roll, thereby preparing a cross-linkable composition 1.

### (Preparation of cross-linkable composition 2)

A cross-linkable composition 2 was prepared in the same manner as in Preparation of cross-linkable composition 1 except that the fluororesin dispersion (B2) was used instead of the fluororesin dispersion (B1).

### (Preparation of cross-linkable composition 3)

A solution preliminarily prepared by mixing water (500 mL) and magnesium chloride (4 g) and the fluororubber dispersion (A) (400 mL) were charged into a 1-L mixer and mixed for 5 minutes, thereby the solids were coagulated. The coagulated solids were collected and dried at 120°C for 24 hours in a drying furnace. The dried, coagulated fluororubber (A) and the fluororesin (C) were charged into a 3-L pressure kneader so as to give a packing factor by volume of 85% and a ratio by volume between the fluororubber (A) and the fluororesin (C) after coagulation of 75/25. They were kneaded until the temperature of the materials (fluororubber and fluororesin) reached 230°C, thereby preparing a compound. The compound was then mixed with a predetermined composition shown in Table 1 using an open roll, thereby preparing a cross-linkable composition 3.

### Example 1-1

### Molding and cross-linking

A metal ring was disposed on a mold for an engine oil seal for automobiles. The cross-linkable composition 1 was charged into the mold, pressurized at 8 MPa, and vulcanized at 180°C for 5 minutes, thereby providing a cross-linked molded product (applicable shaft diameter: 80 mm, outer diameter: 98 mm, width: 8 mm).

### Heating

The resulting cross-linked molded product was heated in a heating furnace maintained at 230°C for 24 hours, and then a ring spring was disposed thereon, thereby providing an engine oil seal for automobiles having the structure shown in Fig. 4. For the resulting engine oil seal for automobiles, the number, bottom cross-sectional areas, and heights of protrusions, and the proportion of the area of the region having the protrusions were measured. In addition, the rotational torque of the engine oil seal for automobiles was measured. Table 1 shows the results.

### Example 1-2

An engine oil seal for automobiles was produced and the measurements were performed in the same manner as in Example 1-1 except that the cross-linkable composition 2 was used instead of the cross-linkable composition 1.

### Comparative Example 1

An engine oil seal for automobiles was produced and the measurements were performed in the same manner as in Example 1-1 except that the cross-linkable composition 3 was used instead of the cross-linkable composition 1.

### Example 2-1

### Molding and cross-linking

A metal ring was disposed on a mold for a transmission oil seal for automobiles. The cross-linkable composition 1 was charged into the mold, pressurized at 8 MPa, and vulcanized at 180°C for 5 minutes, thereby providing a cross-linked molded product (applicable shaft diameter: 80 mm, outer diameter: 98 mm, width: 8 mm).

### Heating

The resulting cross-linked molded product was heated in a heating furnace maintained at 230°C for 24 hours, thereby providing a transmission oil seal for automobiles having the structure shown in Fig. 7. For the resulting transmission oil seal for automobiles, the number, bottom cross-sectional areas, and heights of protrusions, and the proportion of the area of the region having the protrusions were measured. In addition, the rotational torque of the transmission oil seal for automobiles was measured. Table 1 shows the results.

### Example 2-2

A transmission oil seal for automobiles was produced and the measurements were performed in the same manner as in Example 2-1 except that the cross-linkable composition 2 was used instead of the cross-linkable composition 1.

### Comparative Example 2

A transmission oil seal for automobiles was produced and the measurements were performed in the same manner as in Example 2-1 except that the cross-linkable composition 3 was used instead of the cross-linkable composition 1.

### Example 3-1

### Molding and cross-linking

An attach ring was disposed on a mold for a valve stem seal for automobiles. The full compound was charged into the mold, pressurized at 8 MPa, and vulcanized at 180°C for 5 minutes, thereby providing a cross-linked molded product (lip inner diameter: 4.9 mm, outer diameter: 12.8 mm, height: 10.1 mm).

### Heating

The resulting cross-linked molded product was heated in a heating furnace maintained at 230°C for 24 hours, thereby providing a valve stem seal for automobiles having the structure shown in Fig. 8.

For the resulting valve stem seal for automobiles, the number, bottom cross-sectional areas, and heights of protrusions, and the proportion of the area of the region having the protrusions were measured. In addition, the stroke load of the valve stem seal for automobiles was measured. Table 1 shows the results.

### Example 3-2

A valve stem seal for automobiles was produced and the measurements were performed in the same manner as in Example 3-1 except that the cross-linkable composition 2 was used instead of the cross-linkable composition 1.

### Comparative Example 3

A valve stem seal for automobiles was produced and the measurements were performed in the same manner as in Example 3-1 except that the cross-linkable composition 3 was used instead of the cross-linkable composition 1.

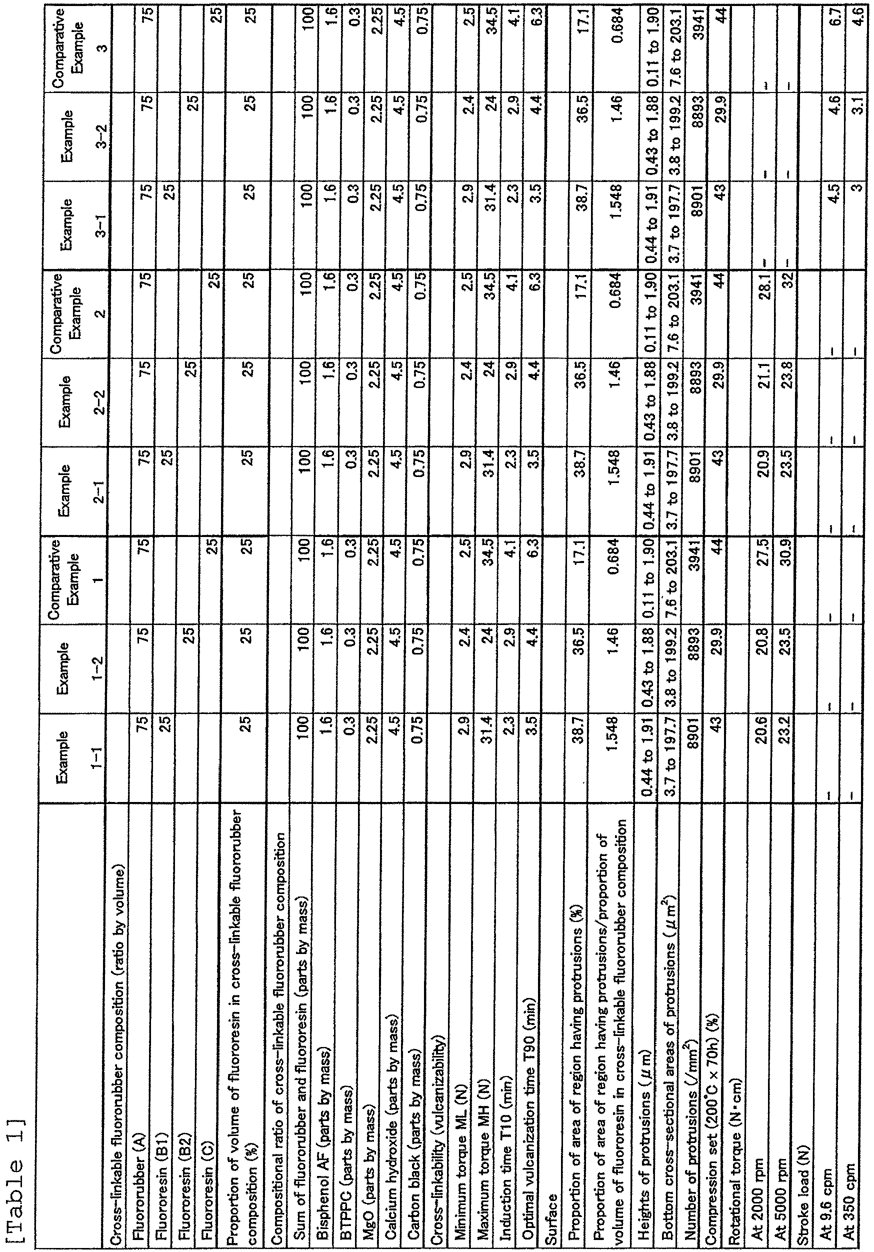

### INDUSTRIAL APPLICABILITY

The oil seal for automobiles of the present invention has excellent sliding properties in addition to usual sealing performance, and thus it is suitable for various oil seals for automobiles. In particular, the oil seal for automobiles of the present invention provides a low rotational torque, and thus it is suitable as an engine oil seal for automobiles and a transmission oil seal for automobiles. Further, the oil seal for automobiles of the present invention provides a low stroke load, and thus it is also suitable as a valve stem seal for automobiles.

### REFERENCE SIGNS LIST

10: seal lip portion
11: protrusions
20, 50, 119: housing
21: engine oil seal for automobiles
22, 52, 86: elastic component
23, 53: main lip portion
24, 54: fitting portion
25: sub-lip portion
26, 56: metal ring
27, 57: ring spring
29: crankshaft
30: engine
32: crank pulley
33: connecting rod
34: piston
35: valve
51: transmission oil seal for automobiles
59: axle
60: transmission
62: main shaft (input shaft)
63: counter shaft (output shaft)
81: valve stem seal for automobiles
82: valve stem
83: valve stem guide
86a: seal lip portion
86b: static seal portion
87: attach ring
88: spring
95: engine valve
110: oil seal torque meter
111: oil seal for measurement
112: oil chamber
113: bearing
114: shaft
115: oil seal
116, 126: load cell
117: oil seal holder
120: stroke load tester
121: valve stem seal for measurement
123: vibration generator
129: valve guide
127: valve stem shaft
128: support

## Claims

1. An oil seal for automobiles, comprising
an elastic component including a seal lip portion,
the elastic component comprising a composition that contains fluororubber and fluororesin, and having protrusions at least on a surface of the seal lip portion,
the protrusions substantially consisting of the fluororesin contained in the composition, and
the fluororesin being a copolymer comprising a polymerized unit based on tetrafluoroethylene and a polymerized unit based on hexafluoropropylene.

2. The oil seal for automobiles according to claim 1,
wherein the fluororubber is a copolymer comprising
a polymerized unit based on vinylidene fluoride, and
a polymerized unit based on at least one monomer selected from the group consisting of tetrafluoroethylene, hexafluoropropylene, and perfluoro(alkyl vinyl ethers).

3. The oil seal for automobiles according to claim 1 or 2,
wherein the proportion of the volume of the fluororesin in the seal lip portion is 0.05 to 0.45,
the proportion of the area of regions having the protrusions on the surface of the seal lip portion is 0.06 or higher, and
the proportion of the area of the regions having the protrusions on the surface of the seal lip portion is 1.2 or more times as high as the proportion of the volume of the fluororesin in the seal lip portion.

4. The oil seal for automobiles according to claim 1, 2, or 3,
wherein each of the protrusions is 0.1 to 30.0 µm in height.

5. The oil seal for automobiles according to claim 1, 2, 3 or 4,
wherein each of the protrusions is 0.1 to 2000 µm² in bottom cross-sectional area.

6. The oil seal for automobiles according to claim 1, 2, 3, 4 or 5, which is used as an engine oil seal for automobiles,
wherein the seal lip portion comprises at least a main lip portion, and
the elastic component has protrusions at least on a surface of the main lip portion.

7. The oil seal for automobiles according to claim 1, 2, 3, 4 or 5, which is used as a transmission oil seal for automobiles,
wherein the seal lip portion comprises at least a main lip portion, and
the elastic component has protrusions at least on a surface of the main lip portion.

8. The oil seal for automobiles according to claim 1, 2, 3, 4 or 5, which is used as a valve stem seal for automobiles configured to be disposed at an end of a valve stem guide of an engine,
wherein the seal lip portion is configured to be slidably in close contact with the valve stem of an engine.
